# EUROPEAN PATENT APPLICATION

(11) **EP 4 819 758 A1**
(43) Date of publication of application: **07.10.2026**
(21) Application number: 24897581.5
(22) Date of filing: 27.11.2024
(51) Int. Cl.: H04W 88/02, H04W 4/38, H04W 24/10, H04W 36/08

(54) **COMMUNICATION SYSTEM**

(30) Priority: 29.11.2023 JP 2023201742
(71) Applicant: Mitsubishi Electric Corporation, Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2024/041959
(87) International publication number: WO 2025/115897

(57) **Abstract**

A communication system includes a base station supporting a fifth generation radio access system and a communication terminal configured to connect to the base station, in which sensing processing using a sensing beam is performed between a transmitting base station being the base station that transmits a sensing resource and a receiving communication terminal being the communication terminal that receives the sensing resource, the communication terminal performing sensing beam management processing is configured to measure a sensing resource set including one or a plurality of the sensing resources corresponding to candidate(s) of the sensing beam, and transmit a measurement result to the transmitting base station, and the transmitting base station is configured to determine the sensing beam based on the measurement result, and notify the receiving communication terminal of the determined sensing beam.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

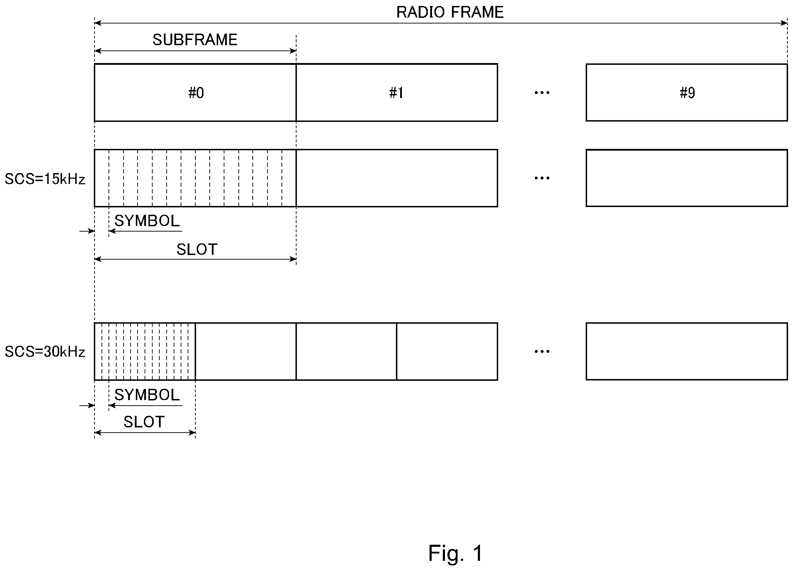

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are proposed for the mobile communication system. For example, introduction of a technology of integrating sensing (detection of an object or the like using radio waves) and communication is proposed (see NPLs 30 and 31).

### Citation List

### Non Patent Literature

[NPL 1] 3GPP TS 36.300 V17.5.0
[NPL 2] 3GPP TS 38.300 V17.5.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.2.2
[NPL 11] 3GPP TS 38.211 V17.5.0
[NPL 12] 3GPP TS 38.212 V17.5.0
[NPL 13] 3GPP TS 38.213 V17.6.0
[NPL 14] 3GPP TS 38.214 V17.6.0
[NPL 15] 3GPP TS 38.321 V17.5.0
[NPL 16] 3GPP TS 38.322 V17.3.0
[NPL 17] 3GPP TS 38.323 V17.5.0
[NPL 18] 3GPP TS 37.324 V17.0.0
[NPL 19] 3GPP TS 38.331 V17.5.0
[NPL 20] 3GPP TS 38.401 V17.5.0
[NPL 21] 3GPP TS 38.413 V17.5.0
[NPL 22] 3GPP TS 37.340 V17.5.0
[NPL 23] 3GPP TS 38.423 V17.5.0
[NPL 24] 3GPP TS 38.305 V17.5.0
[NPL 25] 3GPP TS 23.273 V18.2.0
[NPL 26] 3GPP TR 23.703 V12.0.0
[NPL 27] 3GPP TS 23.287 V18.0.0
[NPL 28] 3GPP TS 23.303 V17.1.0
[NPL 29] 3GPP TS 38.340 V17.5.0
[NPL 30] 3GPP TR 22.837 V19.0.0
[NPL 31] 3GPP RWS-230250
[NPL 32] 3GPP SWS-230050
[NPL 33] 3GPP RWS-230227
[NPL 34] 3GPP RWS-230105
[NPL 35] 3GPP TS 23.502 V18.2.2
[NPL 36] 3GPP TR 23.700-88 V18.0.0

### SUMMARY

### Technical Problem

In the mobile communication system, it is proposed that not only communication with the UE but also detection of a target using sensing is performed (see NPLs 30 and 31). The target of sensing includes a target other than the UE (not including the UE), such as an intruder, an obstruction, or a river or the atmosphere. Specific methods necessary for performing sensing to satisfy performance required for sensing in the mobile communication system are not disclosed and are unclear. Thus, in the mobile communication system, there is a problem that sensing processing cannot be performed.

The present disclosure is made in view of the problem described above, and has one object to implement not only communication with a UE but also sensing processing in a communication system.

### Solution to Problem

A communication system according to the present disclosure is a communication system including a base station supporting a fifth generation radio access system and a communication terminal configured to connect to the base station. Sensing processing using a sensing beam is performed between a transmitting base station being the base station that transmits a sensing resource and a receiving communication terminal being the communication terminal that receives the sensing resource. The communication terminal performing sensing beam management processing is configured to measure a sensing resource set including one or a plurality of the sensing resources corresponding to one or more candidates of the sensing beam, and transmit a measurement result to the transmitting base station. The transmitting base station is configured to determine the sensing beam, based on the measurement result, and notify the receiving communication terminal of the determined sensing beam.

### Advantageous Effects of Invention

According to the present disclosure, not only communication with a UE but also sensing processing can be implemented in a communication system.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a conceptual diagram of sensing of a case in which a base station is a transmitting node of sensing resources, and UEs are receiving nodes of sensing resources;
Fig. 12 is a conceptual diagram of sensing of a case in which a base station is a transmitting node of sensing resources, and base stations are receiving nodes of sensing resources;
Fig. 13 is a conceptual diagram of sensing of a case in which a UE is a transmitting node of sensing resources, and base stations are receiving nodes of sensing resources;
Fig. 14 is a conceptual diagram of sensing of a case in which a UE is a transmitting node of sensing resources, and UEs are receiving nodes of sensing resources;
Fig. 15 is a diagram illustrating a sequence example of sensing BM according to a first embodiment;
Fig. 16 is a diagram illustrating a sequence example of sensing BM when a receiving UE performs an HO according to a second embodiment;
Fig. 17 is a diagram illustrating a sequence example of sensing BM when a sensing target moves according to a third embodiment;
Fig. 18 is a diagram illustrating another sequence example of sensing BM when a sensing target moves according to the third embodiment;
Fig. 19 is a diagram illustrating a sequence example of non-3GPP sensing processing according to a fourth embodiment;
Fig. 20 is a diagram illustrating a sequence example of sensing processing using a UP according to a fifth embodiment; and
Fig. 21 is a diagram illustrating another sequence example of sensing processing using a UP according to the fifth embodiment.

### DETAILED DESCRIPTION

### First Embodiment

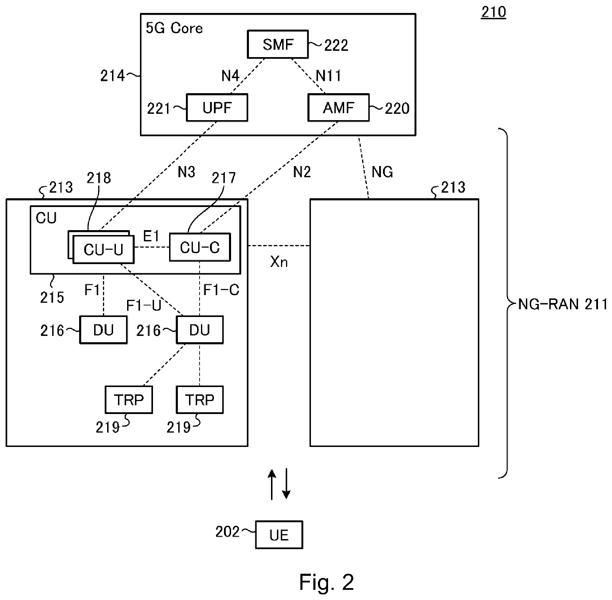

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

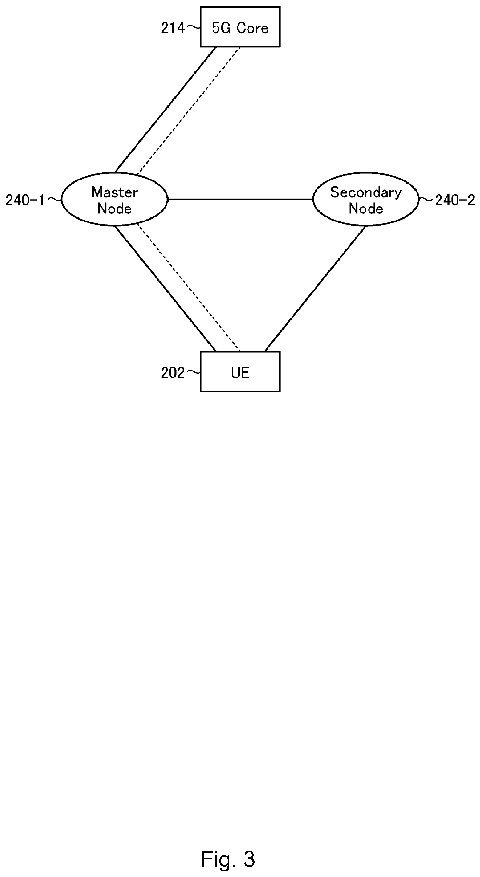

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

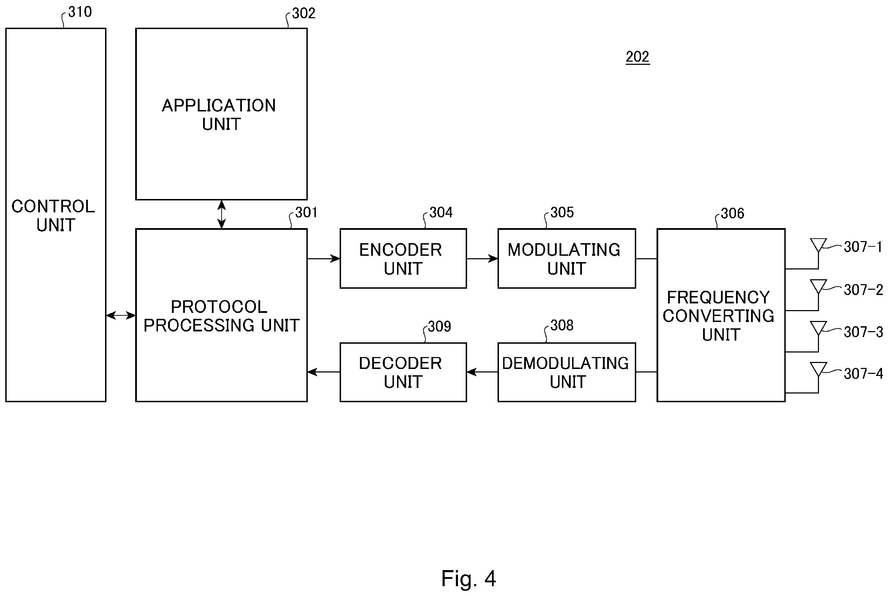

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

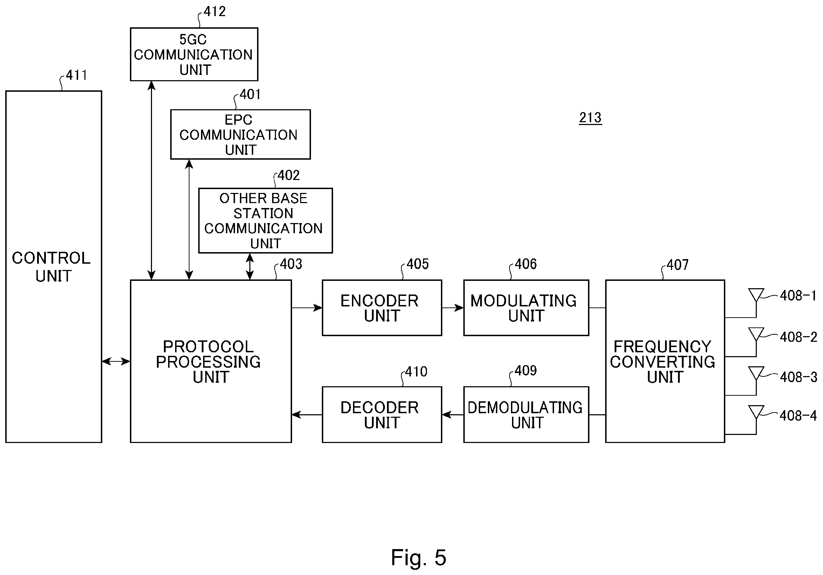

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

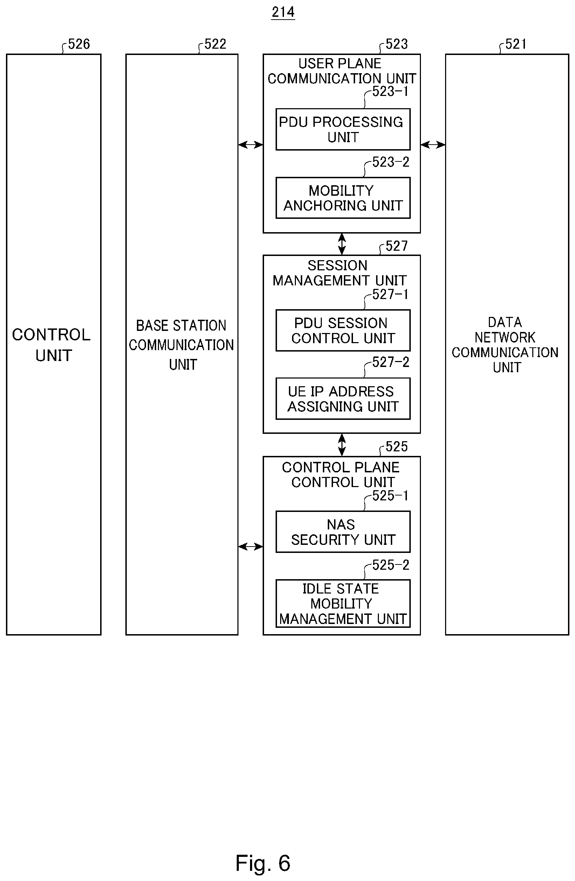

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

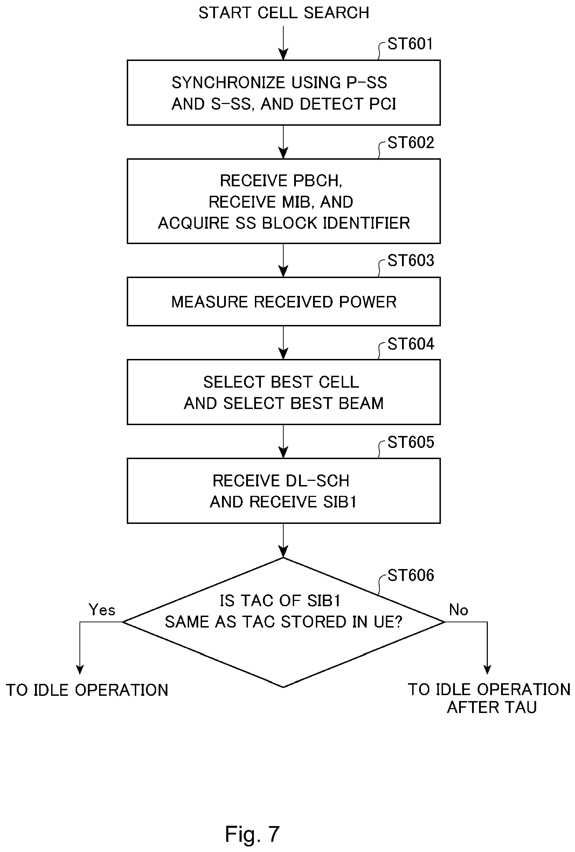

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network apparatus") updates the tracking area list, based on an identification number (a UE-ID or the like) of the communication terminal transmitted from the communication terminal together with a TAU request signal. The core network apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

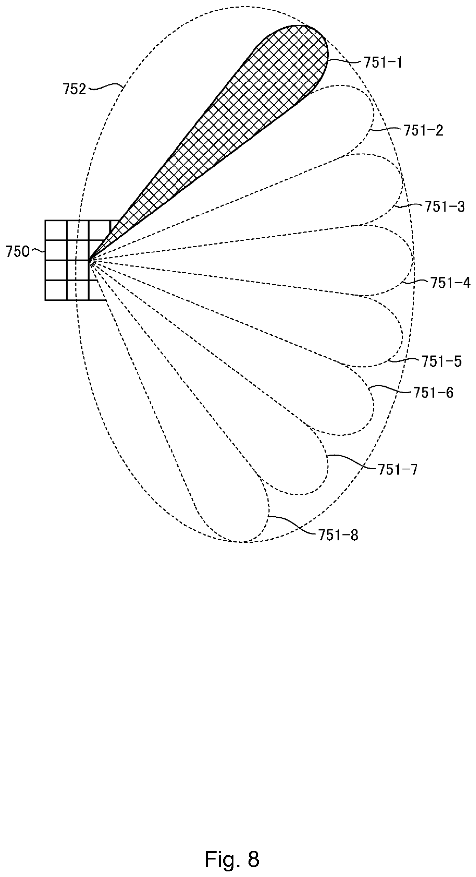

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

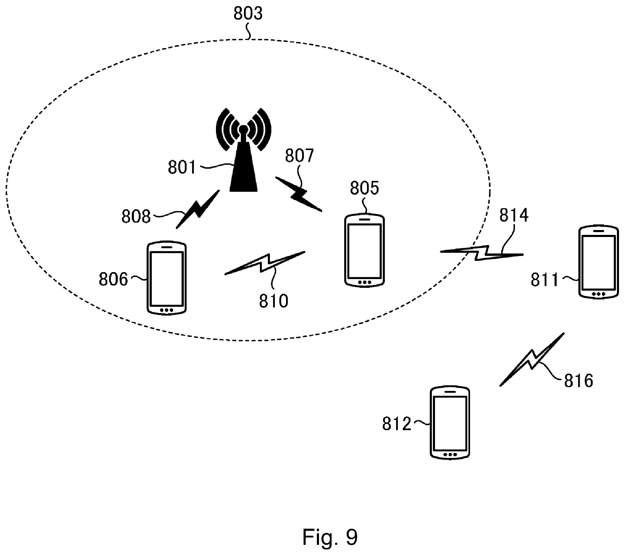

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

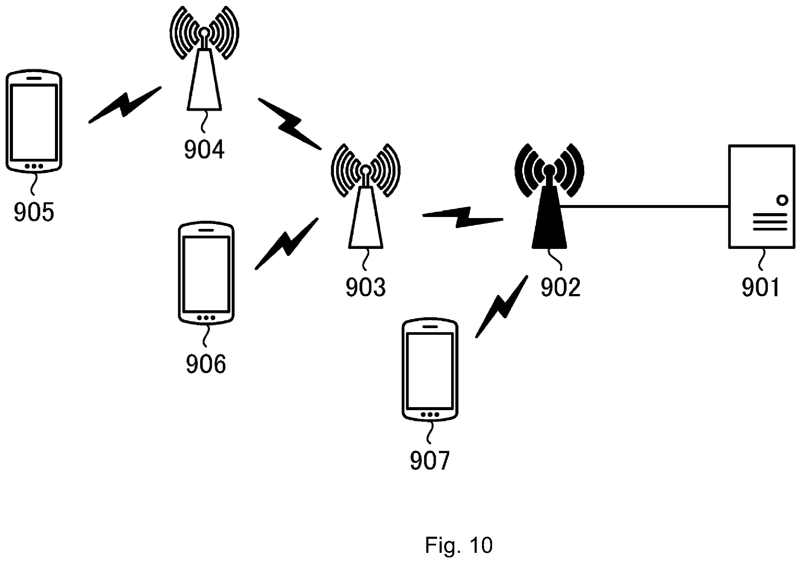

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a mobile communication system of 3GPP, it is proposed that not only communication with the UE but also detection of a target using sensing is performed (see NPLs 30 and 31). The target of sensing also includes entities other than the UE, and thus the location management function introduced in the mobile communication system of 3GPP cannot be simply applied to sensing. A specific method for performing sensing in the mobile communication system is required.

It is proposed that a function (which may be a node or an entity) having a function of managing sensing is provided (see NPL 32). For example, this is referred to as a sensing function (SF). However, NPL 32 does not disclose specific sensing management, such as what is managed and how it is managed.

As sensing management, for example, there are management of processing related to sensing, such as a sensing request, a sensing configuration, and sensing termination, and the like. The SF may have a function of a sensing server. By providing a function having the function of managing sensing, sensing processing can be uniformly managed, and complexity of the sensing processing can be reduced.

The SF may be provided separately from other functions in the NW. This can reduce complexity of processing, and can reduce malfunctions. As another method, the SF may be included in other functions in the NW. This can facilitate cooperation with other functions, and can reduce a signaling amount.

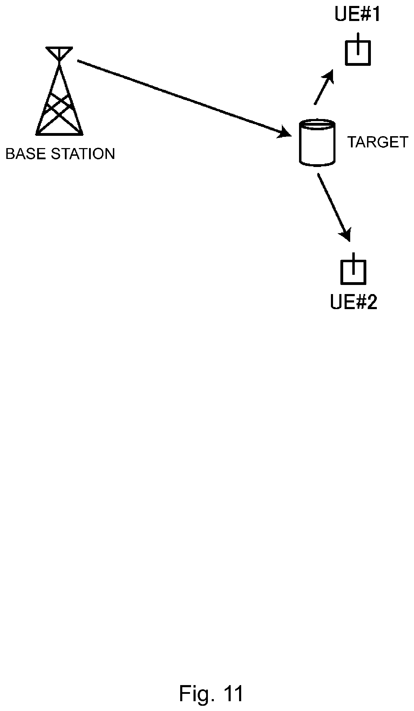

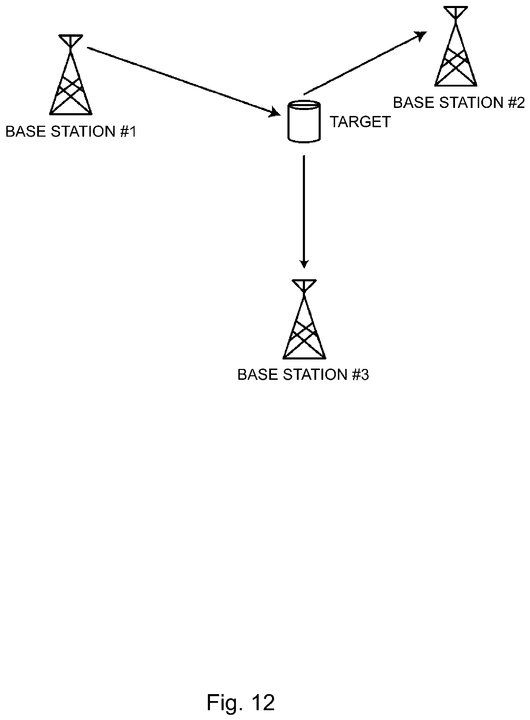

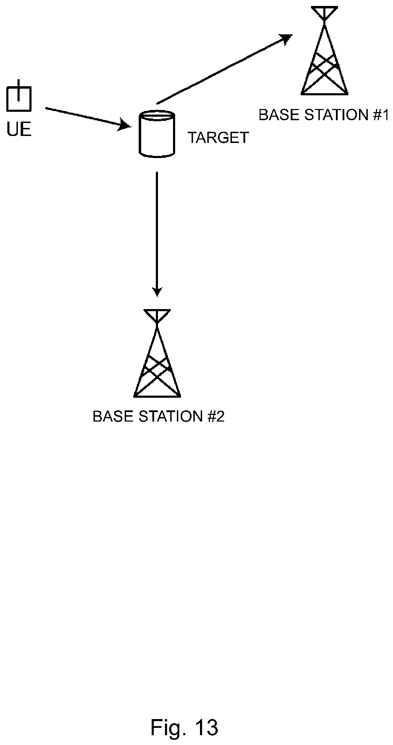

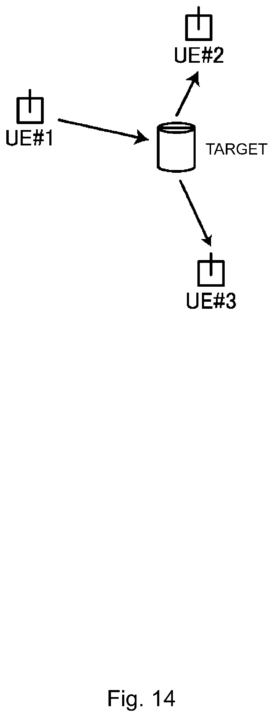

In sensing using the mobile communication system, it is proposed that sensing of a target is performed by using UEs and base stations (see NPL 31). Fig. 11 to Fig. 14 are conceptual diagrams of sensing using UE(s) and base station(s). Fig. 11 is a case in which a base station is a transmitting node of resources (sensing resources) used for sensing, and UEs are receiving nodes of sensing resources. Fig. 12 is a case in which a base station is a transmitting node of sensing resources, and base stations are receiving nodes of sensing resources. Fig. 13 is a case in which a UE is a transmitting node of sensing resources, and base stations are receiving nodes of sensing resources. Fig. 14 is a case in which a UE is a transmitting node of sensing resources, and UEs are receiving nodes of sensing resources.

A node that transmits sensing resources may be simply referred to as a transmitting node. When the node that transmits sensing resources is a base station, it may be simply referred to as a transmitting base station. A node that receives sensing resources may be simply referred to as a receiving node. When the node that receives sensing resources is a UE, it may be simply referred to as a receiving UE.

The transmitting base station transmits radio waves for sensing to the target. The transmitting base station transmits resources (sensing resources) used for sensing on the sensing radio waves. The transmitting base station may transmit sensing resources by using beams. The sensing resources may be resources on the frequency-time axis. For example, the sensing resources may be a signal provided for sensing. For example, the sensing resources may be an RS transmitted on the frequency-time axis. For example, the sensing resources may be an RS, a PRS, a CSI-RS, a synchronization signal block (SSB), an SS, a MIB, a DM-RS of a MIB, or the like provided for sensing.

The transmitting base station determines a beam to be used for sensing. The transmitting base station may use a communication beam for a sensing beam. The communication beam is not limited to a beam that actually transmits data, and may be a beam configured for the UE by the transmitting base station. For example, the base station may determine the sensing beam by using a measurement result report in the UE for an RS corresponding to the communication beam. The transmitting base station may determine the sensing beam by using a measurement result report for an SSB, a CSI-RS, or a PRS, for example. For example, the transmitting base station may determine a beam used for sensing using the communication beam with the receiving UE by using information on the receiving UE received from the SF. For example, a beam used for sensing using a beam transmitted around the communication beam with the receiving UE may be determined by using information on the receiving UE received from the SF.

The transmitting base station may select one sensing beam from among a plurality of communication beams. This is effective when there are a plurality of receiving UEs and there are a plurality of beams used for communication with the UEs. By using one beam for sensing, the sensing processing can be facilitated.

The transmitting base station transmits sensing resources on the determined sensing beam. The sensing resources may be an RS provided for sensing that is configured for sensing, for example. Alternatively, the sensing resources may be a PRS, a CSI-RS, an SSB, or the like. The transmitting base station determines the sensing resources to be used for sensing.

In order to identify the beam, the transmitting base station may transmit QCL information of the sensing resources to the UE. The QCL information can indicate with which RS the sensing resources are quasi-colocated.

The transmitting base station performs sensing configuration including sensing resource information, QCL information, and the like. In this manner, the sensing configuration used for detecting a sensing target can be derived. The transmitting base station may transmit the sensing configuration to the SF.

The transmitting base station may sweep beams. A plurality of beams in different directions may be transmitted. Beam sweeping may be performed by using a plurality of beams. The transmitting base station may select a plurality of beams from among a plurality of communication beams as the sensing beams. For example, the transmitting base station may determine a beam used for sensing using a plurality of communication beams with the receiving UE by using information on the receiving UE received from the SF. For example, the communication beam on which one receiving UE performs data communication and a beam in its nearby direction may be used as the sensing beams. For example, the transmitting base station may use communication beams on which a plurality of receiving UEs perform data communication as the sensing beams. The transmitting base station may sweep such a plurality of sensing beams. The transmitting base station may transmit the sensing resources configured for each beam on the plurality of determined sensing beams. The transmitting base station performs sensing configuration including sensing resource information, QCL information, and the like for a plurality of beams. In this manner, the sensing configuration used for detecting a sensing target can be derived. The transmitting base station may transmit the sensing configuration to the SF.

It has been disclosed that the UE reports measurement results of the communication beam to the transmitting base station, and the transmitting base station determines the sensing beam by using the measurement results. The UE may transmit measurement results of a plurality of paths for the same beam to the base station. The UE may transmit measurement results for each path to the base station. The UE may transmit measurement results of LOS and/or NLOS to the base station. The UE may transmit measurement results of LOS and NLOS for each path to the base station. The UE may transmit information indicating whether it is LOS or NLOS for the measurement results of each path. As another method, the UE may include information indicating whether or not the measurement results transmitted to the base station are NLOS in the measurement results for transmission. The UE may include information indicating a probability or likelihood that the measurement results are NLOS in the measurement results for transmission. The UE may include information indicating whether or not the measurement results are LOS in the measurement results for transmission. The UE may include information indicating a probability or likelihood that the measurement results are LOS in the measurement results for transmission. The LOS may be a first arriving path (FAP). The UE may estimate that the FAP is LOS.

The transmitting base station may select a beam having a path of NLOS as the sensing beam. In sensing, the receiving UE may measure a NLOS path from the transmitting base station. The receiving UE can receive and measure reflected waves from a target.

A sensing configuration method will be disclosed. A sensing configuration is shared between the transmitting node and the receiving node. For example, the transmitting base station and one or a plurality of receiving UEs share the sensing configuration.

The SF transmits a request for the sensing configuration to the base station. The base station that has received the request performs the sensing configuration. The base station transmits sensing configuration information to the SF. The SF transmits the sensing configuration information to one or a plurality of receiving UEs. The SF may transmit the sensing configuration information to one or a plurality of receiving UEs via the base station serving the receiving UE(s). In this manner, the receiving UE(s) can acquire the sensing configuration. The transmitting base station and the receiving UE(s) can share the sensing configuration.

The transmitting base station may change the sensing configuration. The changed sensing configuration may be transmitted to the SF. The SF transmits the changed sensing configuration information to one or a plurality of receiving UEs. In this manner, the receiving UE(s) can acquire the changed sensing configuration. The transmitting base station and the receiving UE(s) can share the sensing configuration.

In the method disclosed above, the transmitting base station determines the sensing beam, and the sensing configuration information including the sensing resources transmitted on the sensing beam is transmitted from the transmitting base station to the SF, and then transmitted from the SF to the receiving UE. When the sensing beam is changed as well, the sensing configuration information including the sensing resources transmitted on the sensing beam after the change is transmitted from the transmitting base station to the SF and then from the SF to the receiving UE.

For example, when the sensing target moves, the sensing beam from the transmitting base station needs to be changed to follow the sensing target. However, in the method as disclosed above, the sensing configuration information is transmitted from the transmitting base station to the receiving UE via the SF. Thus, it requires time to change the sensing beam. An indication at fine timings such as in units of slots and in units of symbols cannot be performed from the SF to the receiving UE. From these, problems arise that sensing accuracy deteriorates and the moving sensing target cannot be followed, i.e., tracking of the sensing target is made difficult.

A method for solving such problems will be disclosed.

The transmitting base station performs beam management (BM) for sensing. A BM method for sensing will be disclosed.

The transmitting base station and the UE perform BM for sensing. The UE is not limited to one, and may be a plurality of UEs. The SF may request the transmitting base station to perform BM for sensing. In response to reception of the request, the SF may perform BM for sensing between the transmitting base station and the UE.

The transmitting base station performs, for the UE, BM configuration for sensing. A sensing resource set consisting of one or a plurality of sensing resources may be provided for BM for sensing. The BM configuration for sensing may include at least one of a configuration of the sensing resource set used for sensing BM, a configuration related to measurement, and a report configuration of measurement results. Each of the one or the plurality of sensing resources included in the sensing resource set is associated with a candidate of a beam for sensing, and is transmitted by using the associated beam. The transmitting base station transmits sensing BM configuration information being information indicating contents of the BM configuration for sensing to the UE. The sensing BM configuration information can include a plurality of pieces of configuration information. For example, the sensing BM configuration information can include configuration information of a resource set indicating the sensing resources included in the sensing resource set, configuration information of resource set measurement indicating configuration contents related to measurement of the sensing resource set, report configuration information of resource set measurement results indicating configuration contents related to a report of measurement results of the sensing resource set, and the like. For example, the sensing BM configuration information can include information for identifying the BM configuration for sensing. The information may be an identifier, for example. These pieces of configuration information may be transmitted together, or may be transmitted separately. In this manner, the transmitting base station and the UE can share the resource configuration, the measurement configuration, and the report configuration for sensing BM.

One or a plurality of BM configurations for sensing may be performed from the transmitting base station to the UE. One or a plurality of pieces of sensing BM configuration information may be transmitted from the transmitting base station to the UE. For example, different sensing BM configurations may be configured for sensing services, respectively. For example, even when different key performance indicators (KPIs) are requested for sensing services, the sensing BM configuration more suitable for each service can be performed.

Four examples of information included in the sensing configuration are disclosed below.
(1) Information on the configuration of the sensing resource set.
(2) Information on the configuration of measurement of the sensing resources.
(3) Information on the report of the measurement results of the sensing resources.
(4) Combination of (1) to (3).

The information on the configuration of the sensing resource set of (1) can include an identifier of the sensing resource set and information on the configuration of the sensing resources included in the sensing resource set, for example.

Eight examples of the information on the configuration of the sensing resources are disclosed below.
(1-1) Information on resources used for BM for sensing.
(1-2) Allocation information of the sensing resources.
(1-3) Periodicity and offset information of the sensing resources.
(1-4) Start time, end time, and sensing resource transmission duration information of the sensing resources.
(1-5) Information on the beam used for sensing.
(1-6) QCL information of the sensing resources.
(1-7) Information on power for the sensing resources.
(1-8) Combination of (1-1) to (1-7).

(1-1) may be information of frequency used for sensing BM, for example. For example, (1-1) may be information of an RS used for sensing BM. The information of the frequency used for sensing BM may be information of a frequency band, a frequency layer, a BWP, or the like, for example. A frequency band, a frequency layer, a BWP, or the like for sensing BM may be provided. These may be dedicated to sensing BM. By identifying the frequency used for sensing BM, complexity of processing of nodes that perform the sensing processing, such as the UE and the base station, can be reduced. The information of the RS used for sensing BM may be an RS, a PRS, an SSB, a CSI-RS, or the like provided for sensing, for example. The receiving UE can recognize what sensing resources are to be received.

(1-2) may be time-frequency information for mapping the sensing resources, for example. As time information, for example, there are a symbol, a slot, a radio frame, and the like for mapping the sensing resources. Alternatively, there may be time units such as a second, an hour, a day, and a year. As frequency information, for example, there are a subcarrier, a resource block, a subband, a BWP, a carrier frequency, a frequency layer for sensing, and the like for mapping the sensing resources.

The BM for sensing may be supported in an SCell (which may be a CC). The BM for sensing may be supported in an SCG. The BM for sensing may be supported in a PSCell. The SCell, the SCG, and the PSCell dedicated to the BM for sensing may be provided. For example, complexity of sensing BM processing during communication can be reduced by performing communication in the PCell, performing the BM for sensing in the SCell, or the like.

The allocation information of the sensing resources of (1-2) may be information for identifying the SCell, the SCG, and the PSCell. The receiving UE can receive the configuration information of the sensing resources in the SCell, the SCG, and the PSCell.

The sensing resources may be periodically transmitted. (1-3) may be periodicity and offset information of the periodically transmitted sensing resources.

(1-4) is information of start time, end time, and transmission duration in which the sensing resources are transmitted. For example, in the transmission duration, the sensing resources are periodically transmitted. The units of time may be a symbol, a slot, or a radio frame, or a second, an hour, a day, a year, or the like.

(1-5) is information on the beam used for sensing BM for transmitting the sensing resources. An identifier may be provided to the beam used for sensing BM. The receiving UE can identify the beam used for sensing BM. For example, an identifier used for the communication beam may be used as the identifier of the beam used for sensing BM. Association with the communication beam can be indicated, and a configuration of the communication beam can be utilized.

(1-6) is information of resources having a QCL relationship with the sensing resources. For example, it may be information of a communication RS with which a sensing BM RS has a QCL relationship. For example, it may be information of a sensing RS with which a sensing BM RS has a QCL relationship. As a type of information on a viewpoint by which beams can be considered to be the same in the QCL information, a focus condition may be included. For example, in the focus condition of beams formed in an antenna used for sensing, whether or not the beams can be considered to be the same can be determined. In this manner, for example, processing can be facilitated by substituting measurement results related to communication resources having a QCL relationship with the sensing resources and measurement results of a sensing RS for the measurement results of the sensing resources used for sensing BM or the like.

For example, in a configuration of a communication RS, a sensing BM RS having a QCL relationship with the RS may be configured. For example, in a configuration of a RS for sensing, a sensing BM RS having a QCL relationship with the RS may be configured. It may be notified to the UE as configuration information of the communication RS and configuration information of the sensing RS. In this manner, for example, processing can be facilitated by substituting the measurement results of the sensing resources used for sensing BM for the measurement results related to the communication resources and the measurement results of the sensing RS or the like.

(1-7) is information on transmission power for the sensing resources. For example, the transmission power information may be an absolute value of the transmission power. For example, the transmission information may be a difference between the sensing resources and another channel or another RS. The receiving UE can recognize the transmission power for the sensing resources. For example, the receiving UE may derive path loss by using the transmission power information. The path loss may be used as a sensing measurement index.

Four examples of the information on the configuration of measurement of the sensing resources of (2) are disclosed below.
(2-1) Information on a measurement gap used for BM for sensing.
(2-2) Information on a window for a sensing resource measurement.
(2-3) Information on a sensing resource measurement index.
(2-4) Combination of (2-1) to (2-3).

A measurement gap may be provided for sensing BM. (2-1) is measurement gap duration, start time, end time, or the like for sensing BM, for example. The units of time may be a symbol, a slot, or a radio frame, or a second, an hour, a day, a year, or the like. The measurement gap for sensing BM is not limited to one, and a plurality of measurement gaps for sensing BM may be configured. The measurement gap for sensing BM is effective when sensing BM is performed in a frequency different from a communication frequency, for example. The receiving UE can switch from the communication frequency to a frequency for sensing BM in the gap, and can perform measurement of sensing BM.

A window may be provided for measurement of sensing BM. (2-2) is duration, start time, end time, or the like for a window for sensing BM, for example. The units of time may be a symbol, a slot, or a radio frame, or a second, an hour, a day, a year, or the like. The window for sensing BM is not limited to one, and a plurality of windows for sensing BM may be configured. The window for sensing BM is effective when sensing BM is performed in the communication frequency, for example. For example, the receiving UE need not receive channels and signals for communication in the window for sensing BM. The receiving UE can perform measurement of sensing BM in the window for sensing BM.

12 examples of the information on the sensing resource measurement index of (2-3) are disclosed below.
(2-3-1) RSRP.
(2-3-2) RSRQ.
(2-3-3) Doppler frequency.
(2-3-4) Angle of arrival (AOA).
(2-3-5) Angle of departure (AOD).
(2-3-6) Time difference of arrival (TDOA).
(2-3-7) Channel impulse response (CIR).
(2-3-8) Power delay profile (PDP).
(2-3-9) Sensing measurement time.
(2-3-10) Signal to interference ratio (SIR).
(2-3-11) Signal to interference plus noise ratio (SINR).
(2-3-12) Combination of (2-3-1) to (2-3-11).

Which index is measured as measurement of sensing BM can be configured for the receiving UE. By receiving the information, the receiving UE can recognize which index is to be measured as measurement of sensing BM.

Information on the sensing resources may be included in information on a sensing resource measurement configuration. Information on the sensing resources for performing sensing resource measurement may be included. For example, when a plurality of sensing resources are configured, which sensing resources are to be measured can be recognized.

When the receiving UE receives the configuration of sensing resource measurement, the UE can perform measurement of sensing BM.

Three examples of the information on the report of the measurement results of the sensing resources of (3) are disclosed below.
(3-1) Report trigger.
(3-2) Information on the measurement results.
(3-3) Combination of (3-1) to (3-2).

(3-1) may be information indicating whether the timing of performing the report of the measurement results of the sensing resources is periodic or event-triggered, for example. When the timing of performing the report of the measurement results of the sensing resources is periodic, it may be information of report periodicity, start time, end time, or the like of the measurement results. When the timing of performing the report of the measurement results of the sensing resources is event-triggered, it may be information on a condition of reporting the measurement results of the sensing resources. As the condition, for example, a predetermined threshold of a measurement index of the sensing resources may be used. For example, a threshold of RSRP may be provided. When the RSRP is equal to or larger than or is larger than the threshold, the receiving UE may report the measurement results. As the condition, for example, a case in which a radio wave propagation state or a channel state has changed may be used. For example, when the path of LOS or NLOS changes, the measurement results may be reported. For example, when the FAP changes, the measurement results may be reported.

As another method, in the event-triggered case, the receiving UE may report that the event has occurred. The node that has received the report can recognize that the event has occurred. For example, the sensing BM configuration can be changed by using the report. More suitable sensing BM processing can be performed.

(3-2) may be information on the transmitting base station, information on the measured sensing resources, information on the measured beam used for sensing BM, the sensing resource measurement index, or the like, for example. (3-2) may be an identifier of the transmitting base station, identifiers of the sensing resources, or an identifier of the beam used for sensing BM. The node that has received the measurement results can identify which sensing resource of which beam used for sensing BM of which transmitting base station it is.

Regarding the BM configuration for sensing, the configuration of the sensing resource set, the configuration of the sensing resources, the configuration of sensing measurement, and the report configuration of the sensing measurement results, these pieces of configuration information are not limited to one, and a plurality of pieces thereof may be configured. In each configuration and each piece of information, information for identifying the configuration and the information may be provided. For example, the information for identification may be an identifier. For example, the transmitting base station may configure a plurality of sensing BM configurations and pieces of the configuration information for the UE, and notify the UE of a configuration and a piece of information to be activated among the configurations and the pieces of the configuration information. The UE can identify which configuration it is and which piece of information it is from the plurality of sensing BM configurations and the pieces of the configuration information. In this manner, for example, the sensing BM configuration may be changed according to a measurement environment, and a flexible sensing BM configuration can be performed.

The UE performs measurement of the sensing resource set. The UE performs measurement of the sensing resource set indicated by the configuration information of the resource set included in the sensing BM configuration information. The UE may perform measurement of the resource set by using the configuration information of resource set measurement included in the sensing BM configuration information. The UE transmits the measurement results of the resource set to the transmitting base station. The UE transmits the measurement results of one or a plurality of sensing resources included in the resource set to the transmitting base station. The measurement results of the sensing resources may indicate received quality of the sensing resources, and may be received power, for example. The UE may transmit the measurement results of the resource set to the transmitting base station by using the report configuration information of the resource set measurement results included in the sensing BM configuration information. The measurement results of the sensing resources may be transmitted in association with an identifier of the UE that has performed the measurement. The measurement results of the sensing resources may be transmitted in association with information for identifying the sensing resources. The transmitting base station can recognize of which UE the measurement results are and of which sensing resources the measurement results are. In this manner, the transmitting base station can recognize the measurement results of the sensing resource set in the UE.

Measurement of the sensing resource set may be continuously performed. Even when the UE once receives the sensing BM configuration information and then continuously repeatedly performs measurement of the sensing resource set, measurement of the sensing resource set may be performed by using the configuration information of resource set measurement included in the sensing BM configuration information. The sensing BM configuration information may include the configuration information of repeated measurement of the sensing resource set. The configuration information may be included in the configuration information of sensing resource set measurement. The configuration information may be information on measurement periodicity, for example. For example, it may be measurement periodicity or an offset. The configuration information may be information on the number of measurements, for example. For example, when the configuration information is not transmitted to the UE, continuous measurement may not be performed. By employing such a method, the transmitting base station can configure continuous measurement. Transmission of the measurement results of the sensing resources to the transmitting base station may be continuously performed. In this case as well, transmission of the measurement results of the sensing resources to the transmitting base station may be performed by using the report configuration information of the resource set measurement results included in the sensing BM configuration. The sensing BM configuration information may include the report configuration information of the repeated measurement results of the sensing resource set. The report configuration information may be included in the report configuration information of the sensing resource set measurement results. The report configuration information may be information on report periodicity, for example. For example, it may be report periodicity or an offset. The report configuration information may be information on the number of reports, for example. For example, when the report configuration information is not transmitted to the UE, the report may not be continuously performed. In this manner, the transmitting base station can continuously acquire the measurement results of the sensing resource set from the UE.

The transmitting base station determines the beam for sensing. The transmitting base station may use the measurement results of the sensing resource set received from the UE for determination of the sensing beam. The sensing beam may be a beam in the sensing resource set.

The transmitting base station may determine the receiving UE. The receiving UE is not limited to one, and may be a plurality of receiving UEs. The transmitting base station may use the measurement results of the sensing resource set received from the UE for determination of the receiving UE. The receiving UE may be determined from among the UEs.

The transmitting base station transmits information on the sensing beam to the receiving UE. Identifiers may be provided to the sensing resources in the sensing resource set. The identifiers may be included in a sensing resource set configuration. The information on the sensing beam may include the identifiers of the sensing resources, for example. For example, the identifiers of the sensing resources may be transmission configuration indication (TCI) state information. As another method, information indicating corresponding activation/deactivation (which may be referred to as act/deact) may be provided to each sensing resource in the sensing resource set. The information on the sensing beam may include the information indicating act/deact of each sensing resource, for example. In a case of act, it is used as the sensing beam, and in a case of deact, it is not used as the sensing beam. In a case of deact, measurement of sensing BM may be performed. The sensing beam can be configured for the receiving UE.

The receiving UE receives the sensing resources transmitted on the sensing beam by using the received information on the sensing beam, and performs sensing measurement. For sensing measurement, the sensing configuration information received from the SF may be used. In the sensing configuration information, the configuration information of sensing measurement and the report configuration information of the sensing measurement results may be included.

The receiving UE transmits the sensing measurement results to the transmitting base station. The sensing measurement results may be measurement results of the sensing resources of the sensing beam used for sensing. The transmitting base station transmits the sensing measurement results to the SF. The sensing measurement results may be transmitted in association with the identifier of the UE that has performed the measurement. The sensing measurement results may be transmitted in association with information for identifying the measured sensing resources. The transmitting base station can recognize of which UE the measurement results are and of which sensing resources the measurement results are. For the report of the sensing measurement results, the sensing configuration information received from the SF may be used. In this manner, the transmitting base station can acquire the sensing measurement results in the receiving UE.

The transmitting base station transmits the sensing measurement results to the SF. The sensing measurement results may be transmitted in association with the identifier of the UE that has performed the measurement. The sensing measurement results may be transmitted in association with information for identifying the measured sensing resources. The sensing measurement results may be transmitted in association with information for identifying the transmitting base station. An interface between the transmitting base station and the SF may be provided. The interface may be used for transmission of the sensing measurement results. The transmitting base station may transmit the sensing measurement results to the SF for each receiving UE. For example, when the transmitting base station receives the sensing measurement results from the receiving UE, the transmitting base station may immediately transmit the sensing measurement results to the SF. The SF can acquire the sensing measurement results from the receiving UE early. As another method, the transmitting base station may include the sensing measurement results of a plurality of receiving UEs in one message for transmission to the SF. A signaling amount between the transmitting base station and the SF can be reduced.

The receiving UE may transmit the sensing measurement results to the SF. An interface between the UE and the SF may be provided. The interface may be used for transmission of the sensing measurement results.

The SF derives sensing results. The sensing results may include, for example, three-dimensional object detection results of a target, six-dimensional (three-dimensional coordinates + three-axis directions) object detection results of a target, a shape of an object, a size of an object, a location of an object, velocity of an object, a moving direction of an object, a water level, humidity, atmospheric pressure, a pulse, and the like. The SF may use the sensing measurement results acquired from one or a plurality of receiving UEs for derivation of the sensing results. In this manner, the SF can derive the sensing results.

The sensing beam may be changed. The transmitting base station may change the sensing beam. The transmitting base station may change the sensing beam by using the measurement results of the sensing resource set used for sensing BM from the UE. The transmitting base station may change the sensing beam by using the sensing measurement results from the receiving UE. For example, when the sensing measurement results from the receiving UE are smaller than a threshold (which may be equal to or smaller than a predetermined threshold, for example), and the measurement results of any of the sensing resources of the sensing resource set from the UE are larger than the threshold (which may be equal to or larger than the predetermined threshold, for example), the sensing beam is changed to a beam for transmitting the sensing resources being larger than the threshold. For example, when any one of these conditions is satisfied, it may be changed to a beam for transmitting the sensing resources having the largest value. In this manner, the sensing beam can be changed to a beam with better sensing measurement results. For example, the sensing measurement results may be received power, and it may be changed to a beam with better received power.

The receiving UE may be changed. The transmitting base station may change the receiving UE. The transmitting base station may change the receiving UE by using the measurement results of the sensing resource set used for sensing BM from the UE. The transmitting base station may change the receiving UE by using the sensing results from the receiving UE. For example, the receiving UE whose sensing measurement results are smaller than a threshold (which may be equal to or smaller than a predetermined threshold, for example) is changed to the UE whose measurement results of the sensing resources transmitted on the sensing beam are larger than the threshold (which may be equal to or larger than the predetermined threshold, for example). For example, when the sensing beam is changed, all the UEs whose measurement results of the sensing beam after the change are larger than the threshold (which may be equal to or larger than the predetermined threshold, for example) are changed to the receiving UEs. In this manner, the receiving UE that measures the sensing beam can be changed to the UE with better sensing measurement results.

The transmitting base station transmits information on the changed sensing beam to the receiving UE. In addition, information on the sensing beam before the change may be transmitted. The method of transmitting the information on the sensing beam disclosed above may be applied as appropriate. The sensing beam can be changed. The changed sensing beam can be configured for the receiving UE.

The receiving UE receives the sensing resources transmitted on the changed sensing beam by using the received information on the changed sensing beam, and performs sensing measurement.

For transmission of the measurement results of the changed sensing beam from the receiving UE to the transmitting base station and the SF and derivation of the sensing results in the SF, the methods disclosed above may be applied as appropriate. The transmitting base station can acquire the sensing measurement results of the changed sensing beam by the receiving UE. The SF can derive the sensing results by using the measurement results of the changed sensing beam. Even when the sensing target moves and the beam suitable for sensing changes, the sensing beam can be changed to a suitable beam, the sensing measurement results by the changed sensing beam can be enabled, and the sensing results using the changed sensing beam can be derived.

For a method of transmitting information on sensing, such as the sensing BM configuration information and the information on the sensing beam, from the transmitting base station to the UE or the receiving UE, for example, RRC signaling may be used. For example, a new RRC message for sensing may be provided. For example, it may be included in an RRC reconfiguration (RRCReconfiguration) message for transmission. A large amount of information can be transmitted. As another transmission method, MAC signaling may be used. For example, new MAC signaling for sensing may be provided. For example, it may be included in a MAC CE for transmission. A MAC CE for sensing may be provided. For example, it may be included in a MAC PDU for transmission. A MAC PDU for sensing may be provided. This enables early transmission. As another transmission method, L1/L2 signaling may be used. For example, it may be included in DCI. For example, it may be transmitted on a PDCCH. DCI for sensing may be provided. This enables earlier transmission.

These transmission methods may be combined. For example, the RRC signaling may be used for transmission of the sensing BM configuration information, and the DCI may be used for transmission of the information on the sensing beam. A large amount of information can be configured for the UE as the sensing BM configuration including the sensing resource set, and transmission of the sensing beam can be transmitted earlier. For example, when movement of the sensing target is fast or the like, the configuration and the change of the sensing beam can be performed earlier.

For a method of transmitting information on sensing, such as the measurement results of the sensing resource set and the sensing measurement results, from the UE or the receiving UE to the transmitting base station, for example, RRC signaling may be used. For example, a new RRC message for sensing may be provided. For example, the information on sensing may be included in a measurement report (MeasurementReport) message for transmission. A large amount of information can be transmitted. As another transmission method, MAC signaling may be used. For example, new MAC signaling for sensing may be provided. For example, it may be included in a MAC CE for transmission. A MAC CE for sensing may be provided. For example, the information on sensing may be included in a MAC PDU for transmission. A MAC PDU for sensing may be provided. This enables early transmission. As another transmission method, L1/L2 signaling may be used. For example, the information on sensing may be included in UCI. For example, the information on sensing may be transmitted on a PUCCH. For example, the information on sensing may be transmitted on a PUSCH. UCI for sensing may be provided. This enables earlier transmission.

These transmission methods may be combined. For example, the UCI may be used for transmission of the measurement results of the sensing resource set, and the RRC signaling may be used for transmission of the sensing measurement results. The measurement results of the sensing resource set can be transmitted earlier, and a large amount of information can be transmitted as the sensing measurement results. For example, when movement of the sensing target is fast or the like, the configuration and the change of the sensing beam can be performed earlier.

Determination of the UE that performs sensing BM (which may be the UE for which the BM configuration for sensing is performed) may be performed by the transmitting base station, or may be performed by the SF. When the SF determines the UE that performs sensing BM, information on the UE may be transmitted from the SF to the transmitting base station. The transmitting base station may request the information on the UE that performs sensing BM from the SF.

The UE that performs sensing BM may be the UE under the transmitting base station, for example. For example, it may be the UE supporting a service of performing sensing. For example, it may be a sensing-related UE.

From information on a sensing area, the UEs present in the sensing area are derived. The UE present near the sensing area, the UE that can perform the sensing processing, or the UE that can receive the sensing resources may be derived. These UEs are referred to as sensing-related UEs (sensing-related communication terminals). As the information on the sensing area, information on a predetermined area may be used. One UE may be derived, or a plurality of UEs may be derived. The sensing-related UEs may be derived as candidates of the UEs that receive the sensing resources (which may be referred to as the receiving UEs).

The LMF may derive the sensing-related UEs from the information on the sensing area. The LMF recognizes location information of the UE. By using the LMF, the sensing-related UEs can be identified. The sensing-related UE may be the UE having the location information within a predetermined time. The sensing-related UE may be the UE having the latest location information. The sensing-related UE may be the UE in the process of performing location management or in the process of performing location measurement. By using the UE including newer location information, more accurate sensing can be performed.

The SF may request the LMF to derive the sensing-related UEs. The SF transmits the information on the sensing area to the LMF, and the LMF derives the sensing-related UEs by using the information. The LMF transmits information on the derived sensing-related UEs to the SF. The SF may transmit the information on the sensing-related UEs to the transmitting base station. The transmitting base station may request the LMF to derive the sensing-related UEs. The LMF may transmit the information on the sensing-related UEs to the transmitting base station. The transmitting base station may request the information on the sensing-related UEs from the SF. The SF may transmit the information on the sensing-related UEs received from the LMF to the transmitting base station.

Information on the sensing service may be stored in the UDM or the PCF. The information on the sensing service may include information for identifying the sensing service, for example. For example, it may include a service identifier. The information may be associated with the information on the UE. For example, it may be included and stored in the information on the UE. The information on the UE may be subscription information of the UE, for example. The SF receives the information on the sensing service from an external apparatus or an AF. The SF may request the information on the UE supporting the sensing service from the UDM or the PCF. The information on the sensing service may be included in the request. The UDM or the PCF may derive the UE supporting the sensing service by using the information on the sensing service. The UDM or the PCF may transmit information on the derived UE supporting the sensing service to the SF. The SF can recognize the UE supporting the sensing service, and can derive the UE caused to perform sensing BM.

Another NF may request the information on the UE supporting the sensing service from the UDM or the PCF. The UDM or the PCF may transmit information on the derived UE supporting the sensing service to another NF. As another NF, for example, the SMF may be used.

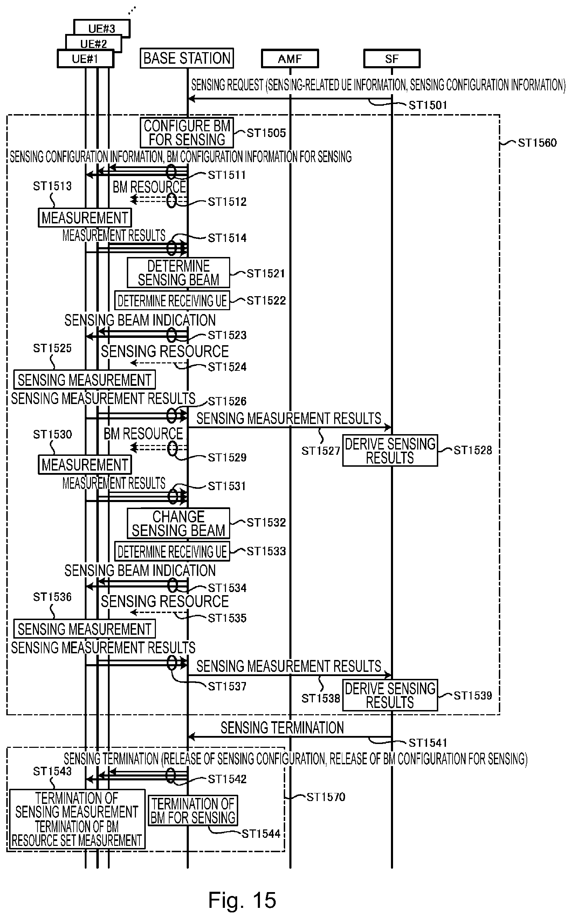

Fig. 15 is a diagram illustrating a sequence example of sensing BM. In ST1501, the SF transmits a sensing request to the transmitting base station. In the request, the sensing configuration information and the information on the sensing-related UEs are included. The sensing configuration information may be the configuration information of sensing measurement, the report configuration information of the sensing measurement results, or the like, for example.

In ST1505, the transmitting base station that has received the sensing request performs BM configuration for sensing. In ST1511, the transmitting base station transmits the sensing configuration information and the sensing BM configuration information to one or a plurality of sensing-related UEs (UE #1, UE #2, and UE #3). The sensing BM configuration information includes the configuration information of the resource set, the configuration information of resource set measurement, and the report configuration information of the resource set measurement results, for example. The sensing BM configuration information may include the information for identifying the sensing BM configuration, for example. The information may be an identifier, for example. The sensing-related UEs receive the sensing BM configuration information. The sensing-related UEs can recognize that the UEs themselves are the UEs to perform measurement of sensing BM.

In ST1512, the transmitting base station transmits BM resources being the sensing resources of the sensing resource set corresponding to the configured beam used for sensing BM. In ST1513, the sensing-related UEs that have received the sensing BM configuration information measure the sensing resource set. For the measurement, the sensing BM configuration that has been received from the transmitting base station may be used. The sensing-related UEs may store the measurement results. In ST1514, the sensing-related UEs transmit the measurement results to the transmitting base station. For the transmission, the sensing BM configuration received from the transmitting base station may be used.

Transmission of the sensing resources of the sensing resource set corresponding to the beam used for sensing BM may be continuously performed. Measurement for sensing BM and transmission of the measurement results may be continuously performed. They may be performed according to the sensing BM configuration. For example, when periodic configurations, periodic measurements, and periodic reports of the sensing resources are configured in the sensing BM configuration, measurement and transmission of the measurement results may be continuously performed with the periodicity.

In ST1521, the transmitting base station that has received the measurement results from the sensing-related UEs determines the sensing beam by using the measurement results. In ST1522, the transmitting base station determines the receiving UEs (UE #1 and UE #2) to perform sensing measurement by using the measurement results. The receiving UEs may be selected from among the sensing-related UEs. In ST1523, the transmitting base station transmits information on the sensing beam to the receiving UEs. For example, it may be information indicating the sensing beam, such as the identifiers of the sensing resources transmitted on the sensing beam. The receiving UEs receive the information on the sensing beam. The receiving UEs can recognize that the UEs themselves are the UEs to perform sensing measurement.

In ST1524, the transmitting base station transmits the sensing resources corresponding to the sensing beam. In ST1525, the receiving UEs that have received the information on the sensing beam measure the sensing resources of the sensing beam. For the measurement, the sensing configuration received from the transmitting base station may be used. The receiving UEs may store the measurement results. In ST1526, the receiving UEs transmit the sensing measurement results to the transmitting base station. The transmitting base station can acquire the sensing measurement results from the receiving UEs.

In ST1527, the transmitting base station transmits the sensing measurement results to the SF. The sensing measurement results of the plurality of receiving UEs may be collectively transmitted. In ST1528, the SF derives the sensing results by using the received sensing measurement results. For the derivation, for example, location information of the receiving UEs and location information of the transmitting base station may be used. The location information of the receiving UEs and the transmitting base station may be acquired from the LMF, for example. For example, the receiving UEs may derive the location information of the receiving UEs and transmit it to the SF. The transmission may be performed via the transmitting base station. The location information may be included in the sensing measurement results for transmission. The location information is not limited to two dimensions, and may be three-dimensional information.

In ST1529, the transmitting base station continuously transmits the sensing resources of the sensing resource set corresponding to the configured beam used for sensing BM. In ST1530, the sensing-related UEs continuously measure the sensing resource set. In ST1531, the sensing-related UEs continuously transmit the measurement results to the transmitting base station.

In ST1532, the transmitting base station that has received the measurement results from the sensing-related UEs determines the sensing beam by using the measurement results. The sensing beam may be changed, or may not be changed. The present figure illustrates a case in which it is changed. In ST1533, the transmitting base station determines the receiving UEs to perform sensing measurement by using the measurement results. The receiving UEs may be changed, or may not be changed. The present figure illustrates a case in which they are not changed. In ST1534, the transmitting base station transmits information on the newly determined sensing beam to the newly determined receiving UEs. The receiving UEs can recognize that the UEs themselves are the UEs to perform sensing measurement as well as the new sensing beam.

In ST1535, the transmitting base station transmits the sensing resources corresponding to the changed sensing beam. In ST1536, the receiving UEs that have received the information on the changed sensing beam measure the sensing resources of the changed sensing beam. For the measurement, the sensing configuration received from the transmitting base station may be used. The receiving UEs may store the measurement results. In ST1537, the receiving UEs transmit the sensing measurement results of the changed sensing beam to the transmitting base station. The transmitting base station can acquire the sensing measurement results of the changed sensing beam from the receiving UEs.

In ST1538, the transmitting base station transmits the sensing measurement results to the SF. The sensing measurement results of the plurality of receiving UEs may be collectively transmitted. In ST1539, the SF derives the sensing results by using the received sensing measurement results. In this manner, the SF can derive the sensing results using the sensing measurement results of the changed sensing beam.

In this manner, owing to sensing BM, the sensing beam and the receiving UEs can be appropriately changed. Thus, for example, even when movement of the sensing target, movement of the receiving UEs, deterioration of a radio wave propagation state between the transmitting base station and the sensing target, deterioration of a radio wave propagation state between the sensing target and the receiving UEs, or the like occurs, more satisfactory sensing of the sensing target can be performed by changing the sensing beam and the receiving UEs.

Processing of sensing termination will be described. The SF determines termination of sensing for which the sensing request is performed in ST1501. In ST1541, the SF transmits information indicating sensing termination to the transmitting base station. In the information, for example, information on sensing for which the sensing request is performed may be included. For example, information for identifying which sensing request it is may be included.

In ST1542, the transmitting base station that has received the sensing termination transmits the information indicating the sensing termination to the sensing-related UEs. The information may include, for example, information indicating release of the sensing configuration and information indicating release of the sensing BM configuration. The information may include, for example, information for identifying the sensing configuration to be released and information for identifying the sensing BM configuration to be released. In this manner, the sensing-related UEs can recognize which sensing configuration and which sensing BM configuration are to be terminated and released.

In ST1543, the sensing-related UEs terminate sensing measurement, and terminate measurement of the sensing resource set of sensing BM. The sensing configuration may be released. In ST1544, the transmitting base station terminates transmission of the sensing resource set of sensing BM, and terminates the BM for sensing. The sensing configuration may be released. In this manner, the sensing-related UEs and the transmitting base station can be caused to terminate sensing, and occurrence of unnecessary processing can be avoided.

By employing the sequence as in the example illustrated in the present figure, sensing using sensing BM can be performed.

Information on the determined beam used for sensing BM may be transmitted from the transmitting base station to the SF. The determined sensing BM configuration may be transmitted from the transmitting base station to the SF. Information on the determined sensing beam may be transmitted from the transmitting base station to the SF. Configuration information of the determined sensing beam may be transmitted from the transmitting base station to the SF. The SF can recognize these pieces of information. For example, the SF can adjust sensing resource configuration and the like with the sensing processing using another base station. For example, such adjustment as to reduce influence of interference may be performed. In the NW, more appropriate sensing processing can be performed.

The beam used for communication may be used for sensing BM. The measurement results of the communication beam may be used for sensing BM. A predetermined UE performs measurement of the communication beam, and transmits the measurement results to the transmitting base station. The beam used for communication may be used as the sensing beam. The sensing beam may be determined from among the beams used for sensing BM. As a method of using the communication beam for sensing BM and sensing, for example, information on QCL with resources (for example, an SSB or an RS) of the communication beam may be configured in the configuration of the sensing resources. For example, as the information on QCL, identifiers for identifying the resources of the communication beam may be included. The receiving UE may treat the communication beam configured with the information on QCL as equivalent to the beam used for sensing BM or sensing. In this manner, the beam used for communication can be used for sensing BM and sensing. For example, the sensing processing can be simplified in that a beam need not be separately configured for sensing, the measurement results of the communication beam can be used, and the like.

The beam configured for sensing may be used for sensing BM. The measurement results of the beam may be used for sensing BM. The UE performs measurement of the beam, and transmits the measurement results to the transmitting base station. The beam configured for sensing may be used as the sensing beam. The sensing beam may be determined from among the beams used for sensing BM. As a method of using the beam for sensing BM and sensing, for example, information on resources (for example, an SSB or an RS) of the beam configured for sensing may be configured in the configuration of the sensing resources. The beam configured for sensing can be used for sensing BM and sensing. As the beam for sensing BM and sensing, configuration different from that of the communication beam can be performed. For example, sensing with higher accuracy can be performed.

The description above has disclosed that measurement and reporting of the sensing resource set for sensing BM are continuously performed. Measurement and reporting of the sensing resource set for sensing BM may be performed prior to sensing measurement. For example, the measurement periodicity and the report periodicity of sensing BM and the sensing periodicity may be aligned. For example, the measurement periodicity and the report periodicity of sensing BM may be n times or 1/n times (n is a natural number) the sensing measurement periodicity. Offsets of measurement timing and report timing of sensing BM and an offset of sensing measurement timing may be configured such that measurement and reporting of the sensing resources for sensing BM are performed prior to sensing measurement. These configurations may be performed in the sensing BM configuration and the measurement configuration of sensing. In this manner, the transmitting base station can use the measurement results of the sensing resource set in a timely manner, and can appropriately determine the sensing beam.

A method of determining the sensing beam will be disclosed. For example, the beam having the best measurement results out of the measurement results of the sensing resource set of sensing BM may be used as the sensing beam. The receiving UE may be the UE that has transmitted the measurement results. Favorable sensing measurement results can be obtained. For example, the beam having the best average value of measurement results of a predetermined number of UEs from the largest measurement results may be used as the sensing beam. The predetermined number of UEs may be the receiving UEs. For example, the beam with the largest number of UEs out of the beams for which the measurement results larger than a predetermined threshold (which may be equal to or larger than the predetermined threshold, for example) are obtained may be used as the sensing beam. The UE that has transmitted the measurement results of the beam larger than the predetermined threshold (which may be equal to or larger than the predetermined threshold, for example) may be the receiving UE. In this manner, favorable sensing measurement results using not only one but a plurality of receiving UEs can be obtained.

The measurement index used for determination of the sensing beam is RSRP, RSRQ, SIR, or SINR of the sensing resources, for example. Other indices may be used. These may be combined together. The transmitting base station may transmit the measurement index to the UE. The measurement index may be included in the information of the measurement configuration and the report configuration of sensing BM for transmission.

The sensing measurement results from one or a plurality of receiving UEs may be used for determination of the sensing beam. Both of the measurement results of the sensing resource set of sensing BM of the UE and the sensing measurement results from the receiving UE may be used. The sensing measurement results may be used for sensing BM. The sensing results with higher accuracy can be obtained.

Measurement for sensing BM may be performed on a trigger basis. For example, when the sensing measurement results of the receiving UE fall below a predetermined threshold, measurement for sensing BM may be performed. The measurement index is RSRP, RSRQ, SIR, or SINR of the sensing resources, for example. Other indices may be used. These may be combined together. The transmitting base station may instruct the receiving UE to perform measurement of sensing BM by using the sensing measurement results received from the receiving UE.

The description above has disclosed that the beam used for communication may be used for sensing BM. A sensing BM configuration method when the beam used for communication is used will be disclosed. The sensing resources included in the sensing resource set of sensing BM may be an RS (for example, a CSI-RS) or an SSB used for communication. As the sensing BM configuration method, a configuration (including measurement configuration and report configuration) method using an RS or an SSB used for communication (see NPL 19) may be applied as appropriate. The configuration may be referred to as a sensing-supported communication beam configuration. When the configuration used for communication is used for the sensing BM configuration, information indicating that it is used for sensing may be added to the configuration information. In this manner, the receiving UE can recognize that the configuration used for communication is used for sensing.

The sensing-supported communication beam configuration may be used only for sensing, or may be used for both of sensing and communication. The same configuration can be used for sensing and communication. For example, the results measured by the receiving UE for communication can be used for sensing.

Measurement and reporting in the sensing-supported communication beam configuration may be performed prior to sensing measurement. For example, the measurement periodicity and the report periodicity of the sensing-supported communication beam and the sensing periodicity may be aligned. For example, the measurement periodicity and the report periodicity of the sensing-supported communication beam may be n times or 1/n times (n is a natural number) the sensing measurement periodicity. Offsets of measurement timing and report timing of the sensing-supported communication beam and an offset of sensing measurement timing may be configured such that measurement and reporting of the sensing-supported communication beam are performed prior to sensing measurement.

A sensing window (SW) or a sensing GAP (SGAP) may be provided. Sensing measurement may be performed in the SW or the SGAP.

The measurement periodicity and the report periodicity of the sensing-supported communication beam may be configured to include at least timing before the SW or the SGAP. As the configuration method, the above-described method may be applied as appropriate, for example. Measurement and reporting of the sensing-supported communication beam can be performed before sensing measurement in the SW or the SGAP.

These configurations may be performed in the sensing-supported communication beam configuration and the measurement configuration of sensing. In this manner, the transmitting base station can use the measurement results of the sensing resource set using the communication beam in a timely manner, and can appropriately determine the sensing beam.

A carrier frequency of the sensing-supported communication beam may be used as a carrier frequency for sensing. A cell of the sensing-supported communication beam may be used as a cell for sensing. For example, the carrier frequency may be used when a cell is configured for sensing. The frequency and the cell need not be used for communication. Because there is no combined use with communication, complexity of the sensing processing is reduced. The frequency and the cell may be used for communication. Owing to the combined use of communication and sensing, resource use efficiency is enhanced.

Another sensing BM configuration method will be disclosed. The configuration is configured for sensing. The configuration of one or a plurality of sensing resources, the measurement configuration, and the report configuration are provided for sensing. An existing configuration for communication is not used. An RS other than an existing RS may be provided as the sensing resources. An existing RS (for example, CSI-RS) or SSB may be used as the sensing resources. The sensing resources are configured for sensing. Being configured for sensing, a new RS can be configured for the sensing resources.

As the configuration information of the sensing resources, for example, there is a configuration of the RS. The configuration of the RS can include allocation information on the frequency axis and the time axis, sequence information, orthogonal code information, and the like. The configuration information of the sensing resources may include information for identifying the sensing resources, for example, identifiers.

The configuration information of the sensing resources may be spatial direction information of the sensing resources, for example. The spatial direction information of the sensing resources may be angle information (azimuth, zenith (elevation)), for example.

As measurement configuration information of the sensing resources, for example, there are information of the sensing resources to be measured, information on a path, and information of a measurement index. The information of the sensing resources may be information for identifying the sensing resources, for example. The information on the path may be information of the number of paths to be measured, information indicating whether LOS is measured or NLOS is measured, or the like, for example. The information of the measurement index may be RSRP, RSRQ, SIR, Doppler frequency, delay, AOA, AOD, time difference, or the like, for example.

The report configuration information of the sensing resources may include, for example, information of the sensing resources to be measured, information on a path to be reported, a measurement index to be reported, information on whether the report is periodic, aperiodic, trigger-based, or the like, report periodicity, a trigger condition, a threshold used for the trigger condition, filter information, control channel information used for the report, and the like. The information of the sensing resources may be information for identifying the sensing resources, for example. The trigger condition is that the report is performed when the measurement results exceed a predetermined threshold (which may be equal to or larger than the predetermined threshold, for example) or the like, for example. The filter information may be information indicating whether or not averaging is performed using a plurality of measurement results, or information for averaging, for example. The control channel information used for the report may be information of a PUCCH when transmission results are included in UCI and reported on the PUCCH, for example. For example, it may be information for identifying a configuration of the PUCCH, for example, an identifier of the PUCCH configuration.

As the information of the sensing resource set, information for identifying one or a plurality of sensing resources included in the sensing resource set may be used. Regarding the sensing resources in the sensing resource set, information of a part or all thereof may be the same.

By configuring the sensing BM configuration for sensing, information that is not present in the existing configuration for communication can be configured, and a configuration suitable for sensing can be configured.

Another sensing BM configuration method will be disclosed. The methods disclosed above may be combined. For example, the configuration information for sensing may be added to the configuration for communication. For example, the configuration information used only for sensing may be added to the configuration for communication. The configuration information used only for communication may be deleted. In this manner, a configuration suitable for sensing can be performed in the configuration for communication.

The SF may transmit a change request for the sensing BM configuration to the transmitting base station. For example, the SF may initiate the change request for the sensing BM configuration by using the sensing results derived using the sensing measurement results acquired from the receiving UE. The SF can transmit the change request for the sensing BM configuration when identification of the sensing target becomes difficult, tracking of the sensing target becomes difficult, or the like, for example. Information included in the change request may be information indicating the change request, information for identifying the sensing BM configuration, information on the receiving UE, sensing resource information associated with the sensing measurement results, the sensing measurement results, the sensing results, information on the sensing service, request cause information, or the like, for example. As another example, information desired to be changed may be included. The information included in the change request may be information on the receiving UE, information on the sensing resources, information on the sensing resource set, the measurement configuration information, the report configuration information, or the like. For example, it may be identifiers of the sensing resources corresponding to the sensing measurement results not contributing to derivation of the sensing results. For example, it may be periodicity information of the sensing resources or report periodicity information for enhancing sensing accuracy. In addition to the information desired to be changed, a configuration value after the change may be included. These pieces of information may be transmitted from the SF to the transmitting base station separately from the change request.

The transmitting base station that has received the sensing BM configuration change request may change the sensing BM configuration. The transmitting base station changes the sensing resources used for sensing BM to sensing resources transmitted on another beam, for example. For example, a change is performed to shorten transmission periodicity of the sensing resources and shorten periodicity of the report configuration.

In this manner, for example, the change request for the sensing BM configuration taking account of the sensing results derived in the SF can be performed. This enables flexible control of the sensing processing, enhancement of sensing accuracy, and power saving in the sensing processing.

The SF may transmit the sensing BM configuration information to the UE. The transmitting base station may perform the sensing BM configuration, and transmit the sensing BM configuration information to the SF. The SF may transmit the sensing BM configuration information received from the transmitting base station to the UE. For the transmission, an interface between the SF and the UE may be used.

The transmitting base station transmits identifiers of the sensing resources (which may be an identifier of the sensing resource set) used for sensing BM to the UE. The UE performs measurement of the sensing resources, and transmits the measurement results to the transmitting base station. The UE may use the sensing BM configuration information received from the SF for sensing BM. In this manner, in sensing BM, the amount of information transmitted from the transmitting base station to the UE can be reduced.

The transmitting base station that has determined the sensing resources used for sensing and the receiving UE transmits the identifiers of the sensing resources to the receiving UE. The receiving UE measures the sensing resources, and transmits the sensing measurement results to the transmitting base station. The transmitting base station transmits the sensing measurement results received from the receiving UE to the SF. The UE may transmit the sensing measurement results to the SF.

By transmitting the sensing BM configuration from the SF to the UE, control of sensing BM can be performed on an interface between the transmitting base station and the UE. Sensing BM control between the transmitting base station and the UE can be performed with low delay, an appropriate sensing beam can be used in a timelier manner, and sensing accuracy can be enhanced.

The description above has disclosed that the SF may be provided in another network function (NF); however, the SF may be provided in the base station. A function in the NW is referred to as an NF. A part or all of the functions of the SF may be provided in the base station. For example, when the base station has a function of deriving the sensing results from the sensing measurement results, which is a function of the SF, the sensing results can be derived in the base station. Thus, the change of the sensing BM configuration using the sensing results and the like can be facilitated early. An appropriate sensing beam can be used in a timelier manner.

In this manner, sensing BM can be performed. The transmitting base station can perform sensing BM with the UE. The configuration and the change of the beam used for sensing need not be performed by the SF and can thus be performed early. For a moving sensing target as well, the sensing beam can be appropriately determined, sensing accuracy can be enhanced, and the sensing target can be tracked.

When the UE moves, the sensing resources may not be received satisfactorily. In such a case, the method disclosed in the first embodiment may be used. For example, by performing the change of the beam used for sensing, the change of the receiving UE, the change of the UE, and the like disclosed in the first embodiment, even when the UE moves, satisfactory sensing can be performed.

### Second Embodiment

Due to movement of the UE or the like, the cell (which may be the base station) to which the UE connects may be changed. For example, when the UE moves between base stations while sensing BM is performed with the base station to which the UE connects, processing of sensing BM becomes difficult, and there arise problems such as deterioration of accuracy of the sensing processing and inability to track the sensing target.

The present embodiment will disclose a method for solving such problems.

Processing of changing the UE performing sensing BM is performed. Processing of changing the receiving UE may be performed. The receiving UE may be changed along with the change of the UE performing sensing BM.

Due to movement of the receiving UE, an HO is performed from an HO source base station to an HO target base station. When the HO of the receiving UE succeeds, the receiving UE transmits an HO success notification to the HO target base station. The base station causes the receiving UE to perform measurement and reporting for communication in order to use them for determination of a trigger condition of the HO.

The HO source base station transmits information on an HO-targeted UE to the HO target base station. When the UE is the receiving UE, information indicating that it is the receiving UE may be included in the information on the HO-targeted UE. When the UE is the UE performing sensing BM, information indicating that it is the UE performing sensing BM may be included in the information on the HO-targeted UE. The HO target base station can recognize that the HO-targeted UE is the UE involved in sensing.

The measurement results of sensing BM of the UE may be included in the information on the HO-targeted UE. The sensing measurement results of the UE may be included in the information on the HO-targeted UE. These measurement results may be a predetermined number of measurement results from the most recent ones. The predetermined number may be statically determined in a standard or the like, or may be notified from the base station or the SF to the UE. The HO target base station can recognize the measurement results used for sensing of the HO-targeted UE.

The HO target base station transmits a notification of the change of the base station of the HO-targeted UE to the SF. Information on the base station itself may be included in the notification. Information on the HO source base station may be included in the notification. For example, it may be an identifier of the base station or the like. The SF can recognize the HO source base station and the HO target base station. When the HO-targeted UE is the receiving UE, information indicating that it is the receiving UE may be included in the notification. When the UE is the UE performing sensing BM, information indicating that it is the UE performing sensing BM may be included. The notification may be transmitted by using an interface provided between the base station and the SF. Setup of the interface may be performed between the HO target base station and the SF. As another method, the notification may be transmitted from the base station to the AMF, and then transmitted from the AMF to the SF. The SF can recognize that the base station of the receiving UE or the UE performing sensing BM has changed due to the HO.

The HO target base station may notify the HO source base station that the HO-targeted UE has succeeded in the HO. For example, the notification may be performed in HO processing. For example, a UE context release notification in the HO processing may be used. The HO source base station can recognize that the HO-targeted UE has succeeded in the HO.

The HO source base station may transmit a notification of the change of the base station of the HO-targeted UE to the SF. The notification may include information on the base station itself. The notification may include information on the HO target base station. The information on the base station itself is an identifier of the HO source base station or the like, for example, and the information on the HO target base station is an identifier of the HO target base station or the like, for example. The SF can recognize the HO source base station and the HO target base station. When the HO-targeted UE is the receiving UE, the notification may include information indicating that the HO-targeted UE is the receiving UE. When the UE is the UE performing sensing BM, the notification may include information indicating that the UE is the UE performing sensing BM. The notification may be transmitted by using an interface provided between the base station and the SF. As another method, the notification may be transmitted from the base station to the AMF, and then transmitted from the AMF to the SF. The SF can recognize that the base station of the receiving UE or the UE performing sensing BM has changed due to the HO.

The HO-targeted UE may transmit a notification of the change of the base station to the SF. The notification may include information on the HO source base station. The notification may include information on the HO target base station. The information on the HO source base station is an identifier of the HO source base station or the like, for example, and the information on the HO target base station is an identifier of the HO target base station or the like, for example. The SF can recognize the HO source base station and the HO target base station. When the HO-targeted UE is the receiving UE, the notification may include information indicating that it is the receiving UE. When the UE is the UE performing sensing BM, the notification may include information indicating that the UE is the UE performing sensing BM. The notification may be transmitted by using an interface provided between the UE and the SF. As another method, the notification may be transmitted from the UE to the AMF, and then transmitted from the AMF to the SF. The SF can recognize that the base station of the receiving UE or the UE performing sensing BM has changed due to the HO.

The SF may change the UE performing sensing BM. For example, when the UE performing sensing BM or the receiving UE moves between base stations, the SF may change the UE performing sensing BM. The SF may change the UE performing sensing BM used for sensing BM by using the received information on the HO-targeted UE and information on the HO source and HO target base stations, for example. For example, the HO-targeted UE may be deleted from the UEs performing sensing BM, and a new UE may be added. The new UE may be the UE suitable for the receiving UE. The method of determining the UE performing sensing BM disclosed above may be applied as appropriate.

The SF may inquire of the LMF about the sensing-related UEs. The LMF may derive the sensing-related UEs, and transmit information on the sensing-related UEs to the SF. The LMF may transmit information on only the sensing-related UEs subject to the change to the SF. As a processing method between the SF and the LMF, the method disclosed above may be applied as appropriate. The SF can obtain the latest sensing-related UE information from the latest location information of the UE, for example. The SF can use the latest sensing-related UE information for determination of the UE performing sensing BM.

The SF transmits information indicating sensing processing termination to the HO-targeted UE. The SF may transmit the sensing processing termination of the HO-targeted UE to the HO target base station, and the HO target base station may transmit the sensing processing termination to the HO-targeted UE. As another method, the SF may transmit the sensing processing termination of the HO-targeted UE to the AMF, and the AMF may transmit the sensing processing termination to the HO-targeted UE. The HO-targeted UE that has received the information terminates the sensing processing. The HO-targeted UE can terminate the sensing processing even in the HO target base station distant from the sensing target, and can avoid continuous performing of unnecessary processing.

The SF transmits the information indicating the sensing processing termination of the HO-targeted UE to the HO source base station. The HO source base station can recognize the sensing processing termination of the HO-targeted UE. For example, after the HO of the HO-targeted UE to another base station, the HO source base station can exclude the HO-targeted UE from the UE performing sensing BM or the receiving UE. Unnecessary signaling can be reduced.

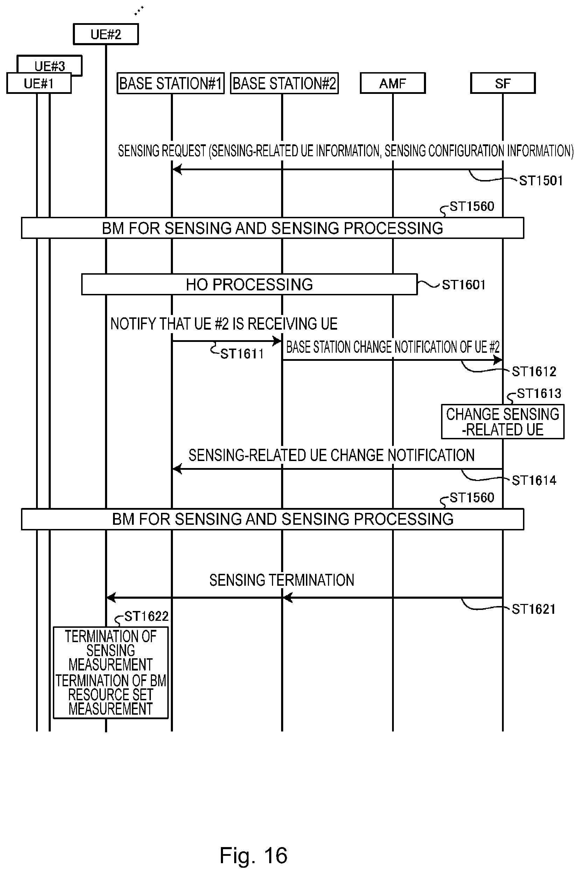

Fig. 16 is a diagram illustrating a sequence example of sensing BM when the receiving UE performs an HO. The present figure illustrates a case in which UE #2 being the receiving UE performs an HO from base station #1 to base station #2 due to movement. The steps common to those of Fig. 15 are denoted by the same step numbers, and common description will be omitted.

In ST1501 and ST1560, the sensing processing using sensing BM is performed by UE #1, UE #2, UE #3, and base station #1. A case is illustrated in which the transmitting base station is base station #1, the sensing-related UEs are UE #1, UE #2, and UE #3, and the receiving UEs are UE #1 and UE #2. In ST1601, the HO processing is performed for UE #2, base station #1 (HO source base station), and base station #2 (HO target base station). For the HO processing, processing described in NPL 2 may be used.

In ST1611, base station #1 transmits information on UE #2 to base station #2. The information may be an identifier of UE #2 or information indicating that UE #2 is the receiving UE, for example. The information may be performed after the HO processing termination, or may be performed in the HO processing. For example, the information may be included in an HO request response (HO request Ack) for transmission. In ST1612, base station #2 transmits the information on UE #2 to the SF, and notifies that the base station to which UE #2 connects has changed. The information may include the identifier of UE #2, information indicating that UE #2 is the receiving UE, and information indicating that UE #2 has performed the HO to base station #2, for example. The SF can recognize that UE #2 has performed the HO from the transmitting base station (base station #1) to another base station (base station #2).

In ST1613, the SF that has recognized that UE #2 has performed the HO from the transmitting base station (base station #1) to another base station (base station #2) changes the sensing-related UEs. UE #2 may be excluded from the sensing-related UEs. In ST1614, the SF transmits information indicating the change of the sensing-related UEs to the transmitting base station. In the information, for example, information on the sensing-related UEs excluding UE #2 may be included for transmission. In this manner, the transmitting base station can recognize that UE #2 is excluded from the sensing-related UEs.

The transmitting base station excludes UE #2 from the sensing-related UEs, newly performs the BM configuration for sensing in ST1560, and performs sensing BM with new sensing-related UEs. In ST1560, the sensing processing using sensing BM is performed.

In this manner, even when the receiving UE moves from the transmitting base station to another base station due to the HO, the sensing processing using sensing BM can be performed with the receiving UE being excluded.

In ST1621, the SF transmits information indicating sensing termination to UE #2. Transmission of the information to UE #2 is transmitted via the HO target base station (base station #2). UE #2 can receive the information. In ST1622, UE #2 that has received the information terminates sensing measurement, and terminates measurement of the sensing resource set of sensing BM. The sensing configuration may be released. In this manner, UE #2 that has performed the HO to another base station can be caused to terminate sensing, and occurrence of unnecessary processing can be avoided.

When the UE performing sensing BM or the receiving UE performs the HO from the transmitting base station to another base station, the UE may terminate the sensing processing. The UE may transmit a notification of the sensing processing termination to the SF. When the UE performing sensing BM or the receiving UE performs the HO to another base station, the transmitting base station may exclude the UE from the UE performing sensing BM or the receiving UE. The transmitting base station may transmit a notification of exclusion of the receiving UE to the SF. In this manner, along with the HO of the UE performing sensing BM or the receiving UE to another base station, the sensing processing can be terminated early.

Processing of a case in which the UE performs an HO to the transmitting base station will be disclosed. The HO source base station of the UE transmits information on a capability of the sensing processing (which may be referred to as a sensing capability) of the UE to the HO target base station. The information may be transmitted in the HO processing. The HO source base station may transmit an identifier of the UE, information of the HO source base station, information indicating whether or not the HO source base station is the transmitting base station, and the like to the HO target base station. The HO target base station transmits the information on the sensing capability of the UE to the SF. When the HO target base station is the transmitting base station, the HO target base station may transmit the information to the SF. The HO target base station may transmit, to the SF, the identifier of the UE, the information of the HO source base station, information of the HO target base station, information indicating whether or not the HO target base station is the transmitting base station, and the like. The SF can determine whether or not the UE that has performed the HO to the transmitting base station has the sensing capability.

The HO source base station or the UE that has performed the HO may notify the SF of the change of the base station of the UE that has performed the HO or the information on the sensing capability of the UE that has performed the HO. The method disclosed above may be applied as appropriate.

The SF that has received information that the UE has performed the HO from the HO target base station derives the sensing-related UEs. The SF may determine whether or not the HO target base station is the transmitting base station. The SF may determine whether or not the UE that has performed the HO has the sensing capability. For example, when the HO target base station is the transmitting base station and the UE that has performed the HO has the sensing capability, the SF may derive the sensing-related UEs. As a method of deriving the sensing-related UEs, the method disclosed above may be applied as appropriate.

The SF transmits information indicating the change of the sensing-related UEs to the HO target base station. Information of newly derived sensing-related UEs may be included. The UE that has performed the HO may be included in the sensing-related UEs. In this manner, the SF can transmit information of the newly derived sensing-related UEs including the UE that has performed the HO to the transmitting base station. The transmitting base station can perform sensing BM between the UE and the transmitting base station by using the information of the sensing-related UEs received from the SF. For sensing BM and the sensing processing, the method disclosed above may be applied as appropriate.

In this manner, even when the UE performs the HO to the transmitting base station, sensing BM taking account of the UE that has performed the HO can be performed. The sensing processing using sensing BM can be performed.

The transmitting base station may include the UE that has performed the HO in the UE performing sensing BM. The transmitting base station determines whether or not the UE that has performed the HO has the sensing capability, and when the UE has the sensing capability, sensing BM may be performed with the UE being included in the UE performing sensing BM. In this manner, sensing BM and the sensing processing using the UE that has performed the HO can be performed early. After starting the sensing BM, the transmitting base station may transmit, to the SF, information on the sensing capability of the UE that has performed the HO, an identifier of the UE, information of the HO source base station, information of the HO target base station, information indicating whether or not the HO target base station is the transmitting base station, information indicating inclusion in the UE performing sensing BM, and the like. For example, the SF can change the sensing-related UEs by using these pieces of information.

The transmitting base station may transmit the number of UEs performing sensing BM to the SF. For example, it may be periodically transmitted. For example, it may be transmitted when the number of the UEs is changed. When the number of UEs performing sensing BM falls below a predetermined number of UEs, the transmitting base station may transmit, to the SF, information indicating the fall below. The number of the UEs may be included for transmission. When the UEs performing sensing BM become absent, the transmitting base station may transmit, to the SF, information indicating that the UEs become absent. In this manner, the SF can recognize the number of UEs performing sensing BM in the transmitting base station. The SF may change the sensing-related UEs. The number of UEs performing sensing BM may be used for determination of the change in the SF. For example, the SF may widen a selection range of the sensing-related UEs. For example, the sensing-related UEs may be selected by widening the distance from the sensing target. In this manner, the sensing processing can be continued. When the UEs performing sensing BM become absent, the number thereof falls below the predetermined number of UEs, or the like, the SF may transmit sensing termination to the transmitting base station. Occurrence of unnecessary sensing processing can be reduced.

When the receiving UE or the UE performing sensing BM performs an HO from the transmitting base station to another base station, the UE may inform a user that the base station has changed. Regarding the receiving UE or the UE performing sensing BM, when RSRP, RSRQ, SIR, SINR, or the like from the transmitting base station falls below a predetermined threshold (which may be equal to or smaller than the predetermined threshold, for example), the UE may inform a user of the fall below. When the UE performs an HO from another base station to the transmitting base station, the UE may inform a user that the base station has changed. Regarding the UE, when RSRP, RSRQ, SIR, SINR, or the like from the transmitting base station exceeds the predetermined threshold (which may be equal to or larger than the predetermined threshold, for example), the UE may inform a user of the excess. The UE may be the UE having the sensing capability. In this manner, the user can recognize whether or not they are present within the transmitting base station. For example, the user can avoid moving out of the transmitting base station. The user can continuously perform sensing within the transmitting base station.

In this manner, even when the UE involved in sensing moves between cells, sensing BM can be continuously performed, and accuracy of the sensing processing can be enhanced and the sensing target can be tracked.

### Third Embodiment

The sensing target may move between cells (which may be base stations). For example, when the sensing target moves from coverage of the base station (for example, the transmitting base station) used for sensing into coverage of another base station, the sensing processing using the transmitting base station becomes difficult, and there arise problems such as deterioration of accuracy of the sensing processing and inability to track the sensing target. The sensing target may not be the UE. Thus, the HO processing of the UE cannot be simply applied to movement of the sensing target between base stations.

The present embodiment will disclose a method for solving such problems.

The transmitting base station may be changed.

Location information of the sensing target may be used for determination of the change of the transmitting base station. The sensing results of the sensing target may be used. For example, when the sensing target moves out of a predetermined area, the change of the transmitting base station may be determined. For example, a distance between the transmitting base station and the sensing target may be derived. When the distance exceeds a predetermined threshold (which may be equal to or larger than the predetermined threshold, for example), the change of the transmitting base station may be determined. In this manner, by using the location information of the sensing target, the change of the transmitting base station can be determined due to movement of the sensing target.

The measurement results of the beam used for sensing may be used for determination of the change of the transmitting base station. The measurement results of the sensing resource set used for sensing BM may be used. The measurement results of the sensing beam may be used. The measurement results of the beam used for communication may be used for determination of the change of the transmitting base station. For example, when the communication beam is used as the sensing beam, the measurement results of the communication beam may be used. The measurement results in the UE performing sensing BM or the receiving UE may be used.

The measurement results of all the beams used for sensing BM may be used for determination of the change of the transmitting base station. The measurement results of all the UEs performing sensing BM may be used for determination of the change of the transmitting base station. For example, when the measurement results of all the beams of all the UEs performing sensing BM fall below a predetermined threshold (which may be equal to or larger than the predetermined threshold, for example), the change of the transmitting base station is determined.

As measurement indices used for determination of the change of the transmitting base station, the measurement indices disclosed in the first embodiment may be used. Not only one but a plurality of measurement indices may be used. For example, RSRP or delay may be used. For example, RSRP and delay may be used.

The measurement results of LOS and NLOS may be used for determination of the change of the transmitting base station. The measurement results in the UE performing sensing BM or the receiving UE may be used. For example, when the measurement results of LOS from the transmitting base station are larger than a predetermined threshold (which may be equal to or larger than the predetermined threshold, for example), and the measurement results of NLOS are smaller than the predetermined threshold (which may be equal to or smaller than the predetermined threshold, for example), the change of the transmitting base station may be determined. A path of radio waves transmitted from the transmitting base station and reflected by the target is NLOS. On the other hand, a path of radio waves transmitted from the transmitting base station and directly received is LOS. Accordingly, when the results of LOS are good and the results of NLOS are poor in the UE performing sensing BM or the receiving UE, it can be understood that a distance from the transmitting base station to the UE is small but a distance from the transmitting base station to the sensing target is large. Thus, by using the measurement results of LOS and NLOS for determination of the change of the transmitting base station, the sensing target having moved far away from the transmitting base station can be determined.

As measurement indices used for determination of the change of the transmitting base station based on the measurement results of LOS and NLOS, the measurement indices disclosed in the first embodiment may be used. Not only one but a plurality of measurement indices may be used. For example, RSRP or delay may be used. For example, RSRP and delay may be used.

In this manner, by using the measurement results for determination of the change of the transmitting base station, the need for the location information of the sensing target can be obviated. The sensing results need not be derived from the sensing measurement results to obtain the location information of the sensing target. Thus, the change of the transmitting base station can be determined early.

The change of the transmitting base station may be determined by the SF. The SF may transmit a sensing request to the transmitting base station after the change. The SF may transmit a sensing termination notification to the transmitting base station before the change.

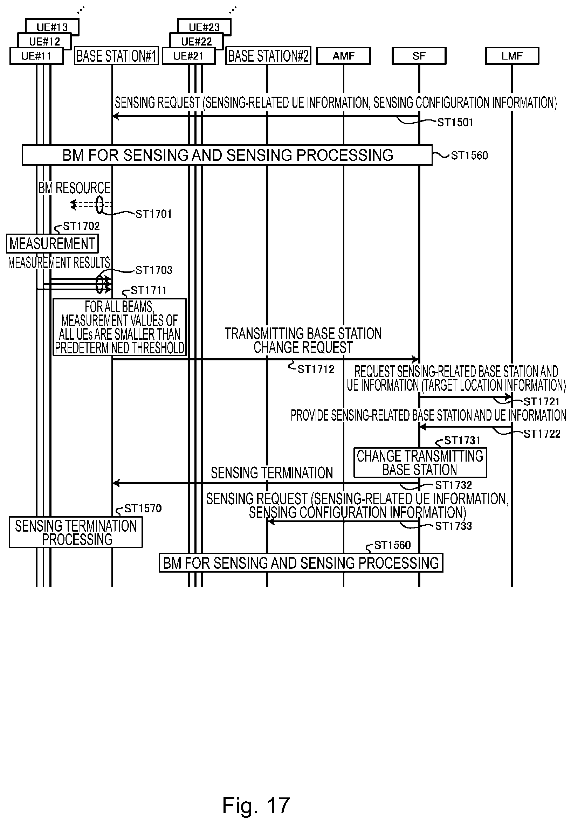

Fig. 17 is a diagram illustrating a sequence example of sensing BM when the sensing target moves. The present figure illustrates a case in which the sensing target moves from base station #1 to base station #2. The steps common to those of Fig. 15 are denoted by the same step numbers, and common description will be omitted.

In ST1560, the sensing processing using sensing BM is performed by UE #11, UE #12, UE #13, and base station #1. The transmitting base station is base station #1. The sensing-related UEs are UE #11, UE #12, and UE #13, for example, and the receiving UEs are UE #11 and UE #12, for example. The BM for sensing is continuously performed.

In ST1701, base station #1 transmits the sensing resources of the sensing resource set of sensing BM. In ST1702, the sensing-related UEs perform measurement of the resources. In ST1703, the sensing-related UEs transmit the measurement results to base station #1. In ST1711, base station #1 determines whether or not transmitting base station change is initiated. The measurement results received from the sensing-related UEs may be used for the determination. For example, in a case where, for all the beams used for sensing BM, measurement values of all the sensing-related UEs are smaller than a predetermined threshold (which may be equal to or smaller than the predetermined threshold, for example), base station #1 initiates the transmitting base station change. The predetermined threshold may be included in the sensing configuration information.

In ST1712, base station #1 transmits information indicating a transmitting base station change request to the SF. In ST1721, the SF that has received the request information transmits information requesting provision of sensing-related base stations and sensing-related UE information to the LMF. In the request information, the sensing results derived by the SF may be included. For example, the location information of the sensing target may be included. The LMF derives the sensing-related base stations and the information on the sensing-related UEs. The LMF may use the sensing results received from the SF for the derivation. In ST1722, the LMF transmits the sensing-related base stations and the information on the sensing-related UEs to the SF. In this manner, the SF can acquire the sensing-related base stations and the information on the sensing-related UEs that can be used for sensing measurement of the sensing target.

In ST1731, the SF determines the sensing-related base station as the transmitting base station, and changes the transmitting base station. In the present figure, the transmitting base station is changed to base station #2.

In ST1732, the SF transmits information indicating sensing termination to base station #1. In ST1570, the sensing processing by UE #11, UE #12, UE #13, and base station #1 terminates. In ST1733, the SF transmits information indicating a sensing request to base station #2 being the transmitting base station after the change. As information on the sensing-related UEs of the request information, the information on the sensing-related UEs received in ST1722 may be used.

In ST1560, base station #2 that has received the sensing request from the SF performs the sensing processing as the transmitting base station. The sensing processing using the sensing BM by UE #21, UE #22, UE #23, and base station #2 is performed. The SF acquires the sensing measurement results from the new transmitting base station (base station #2), and derives the sensing results.

In this manner, even when the sensing target moves between base stations, the sensing processing using sensing BM can be continued in a movement target base station.

The sensing termination notification to the transmitting base station before the change may be performed after transmission of the sensing request to the transmitting base station after the change. The sensing termination notification to the transmitting base station before the change may be performed after reception of the sensing measurement results in the transmitting base station after the change or after derivation of the sensing results. Sensing BM in the transmitting base station after the change can be started before termination of sensing BM in the transmitting base station before the change, and thus continuity of the sensing processing is maintained.

Another method will be disclosed. The change of the transmitting base station may be determined by the transmitting base station. The transmitting base station may select the transmitting base station after the change.

The transmitting base station transmits a request for the sensing BM configuration to a neighboring base station. The request may include information on a transmission source base station (for example, an identifier of the base station), information on sensing, information on the UE performing sensing BM, information on the receiving UE, sensing BM configuration information, and the like. The neighboring base station that has received the request configures the sensing resource set corresponding to one or a plurality of beams used for sensing BM. The measurement configuration and the report configuration for sensing BM may be performed. The neighboring base station transmits the sensing BM configuration information to the transmitting base station. An inter-base station interface may be used for communication between the transmitting base station and the neighboring base station. For example, Xn may be used. The transmitting base station transmits the sensing BM configuration information received from the neighboring base station to the UE performing sensing BM or the receiving UE.

As the sensing BM configuration information, the sensing BM configuration information disclosed in the first embodiment may be applied as appropriate. As a method of transmitting the sensing BM configuration information of the neighboring base station from the transmitting base station to the UE, the method disclosed in the first embodiment may be applied as appropriate.

The UE performing sensing BM or the receiving UE performs measurement of the neighboring base station. The sensing BM configuration information of the neighboring base station received from the transmitting base station may be used for the measurement. The UE performing sensing BM or the receiving UE transmits the measurement results of the neighboring base station to the transmitting base station. As a method of transmitting the measurement results of the neighboring base station from the UE to the transmitting base station, the method disclosed in the first embodiment may be applied as appropriate. The transmitting base station may use the measurement results of the neighboring base station from the UE performing sensing BM or the receiving UE for determination of the change of the transmitting base station and selection of the transmitting base station after the change.

The neighboring base station is not limited to one, and may be a plurality of neighboring base stations. In this manner, the transmitting base station can acquire the measurement results of the beam used for sensing BM of the neighboring base station.

The transmitting base station may determine the change of the transmitting base station by using the measurement results of the beam used for sensing BM of the neighboring base station obtained from the UE performing sensing BM or the receiving UE. The transmitting base station may select the transmitting base station after the change by using the measurement results. For example, when the sensing target moves and enters coverage of another base station, the measurement results of the base station become satisfactory, and thus the base station can be selected as the transmitting base station after the change. The measurement results of the neighboring base station of the receiving UE for which sensing BM is performed in the transmitting base station may be used. Owing to sensing BM, the receiving UE is appropriately changed according to movement of the sensing target. By using the measurement results of the neighboring base station from the receiving UE, the neighboring base station suitable for movement of the sensing target can be selected as the transmitting base station after the change.

A condition for the transmitting base station to initiate the sensing BM configuration request to the neighboring base station may be provided. It may be statically determined in a standard or the like. For example, it may be a case in which, for all the beams used for sensing BM, the measurement values from all the UEs performing sensing BM fall below the predetermined threshold.

It has been disclosed that the measurement results of the sensing resource set used for sensing BM are used; however, as another method, the measurement results for communication may be used. For example, the neighboring base station may transmit a communication beam configuration, for example, the resource configuration, the measurement configuration, and the report configuration transmitted on the communication beam, to the transmitting base station. As the resources of the communication beam, for example, there is an RS, an SSB, or the like used for communication. The transmitting base station transmits, to the UE performing sensing BM or the receiving UE, configuration information about a beam for communication. The UE performing sensing BM or the receiving UE measures the communication beam of the neighboring base station. The UE performing sensing BM or the receiving UE transmits the measurement results of the communication beam of the neighboring base station to the transmitting base station. The transmitting base station may determine the change of the transmitting base station by using the measurement results of the communication beam of the neighboring base station obtained from the UE performing sensing BM or the receiving UE. The transmitting base station may select the transmitting base station after the change by using the measurement results. By using the communication beam configuration, the processing can be simplified.

The transmitting base station may transmit the transmitting base station change request to the transmitting base station after the change. The request may include information on the base station itself, the sensing configuration information, the sensing BM configuration information, the sensing resource set measurement results of the UE performing sensing BM or the receiving UE (for at least one of the transmitting base station and the transmitting base station after the change), the sensing measurement results of the receiving UE, information on the transmitting base station after the change, sensing beam candidates in the transmitting base station after the change, and the like.

The transmitting base station after the change that has received the request starts the sensing processing. The transmitting base station after the change that has received the request performs the sensing BM configuration. The sensing BM configuration transmitted to the transmitting base station before the change may be changed. For example, the beam used for sensing BM may be changed by using the information included in the transmitting base station change request. By changing to a more satisfactory beam, sensing with higher accuracy can be performed.

The transmitting base station after the change that has received the request determines the UE performing sensing BM. For example, the information included in the transmitting base station change request may be used for the determination. For example, the most satisfactory beam corresponding to the sensing resources in the transmitting base station after the change may be derived in the receiving UE, and the UE that can receive the beam may be used.

The transmitting base station after the change may configure measurement of the sensing resource set used for sensing BM transmitted to the transmitting base station before the change for one or a plurality of UEs under the transmitting base station after the change. The configuration of the measurement may be performed after performing the sensing BM configuration in response to reception of the sensing BM configuration request from the transmitting base station. The UE performs the measurement, and transmits the measurement results to the transmitting base station after the change. The transmitting base station after the change that has received the transmitting base station change request may determine the UE performing sensing BM for which the sensing BM configuration is performed by using the measurement results from the UE.

The transmitting base station after the change may transmit a request for provision of information on the UE performing sensing BM to the SF. The SF that has received the request derives the UE performing sensing BM. The SF may request the LMF to provide the information on the UE performing sensing BM. The LMF may derive the UE performing sensing BM, and transmit the information on the UE performing sensing BM to the SF. For transmission and reception of information between the SF and the LMF, the method disclosed above may be applied as appropriate.

The transmitting base station after the change transmits the sensing BM configuration to the UE performing sensing BM. The transmitting base station after the change transmits the sensing configuration to the UE performing sensing BM. The UE performing sensing BM performs measurement of the sensing resource set of sensing BM. The UE performing sensing BM transmits the measurement results to the transmitting base station after the change. The transmitting base station after the change determines the sensing beam and determines the receiving UE. The transmitting base station transmits information on the sensing beam to the receiving UE. The receiving UE receives the sensing resources transmitted on the sensing beam by using the received information on the sensing beam, and performs sensing measurement. The receiving UE transmits the sensing measurement results to the transmitting base station. The transmitting base station transmits the sensing measurement results to the SF. As these sensing BM methods, the methods disclosed in the first embodiment may be applied as appropriate. In this manner, sensing using sensing BM is performed in the transmitting base station after the change.

The transmitting base station after the change that has received the transmitting base station change request need not start the sensing processing. When the sensing processing is not started, a transmitting base station change request rejection may be transmitted to the transmitting base station before the change. Cause information may be included in the rejection. For example, the cause may be a high load of the base station itself, absence of UEs having a capability of the sensing processing within the base station itself, or the like. The transmitting base station before the change that has received the rejection may reselect the transmitting base station after the change from other neighboring base stations.

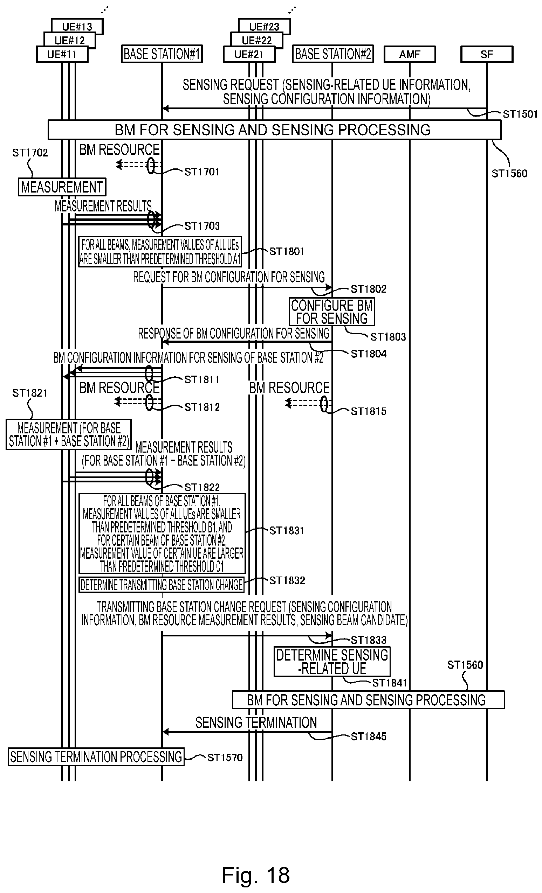

Fig. 18 is a diagram illustrating another sequence example of sensing BM when the sensing target moves. The present figure illustrates a case in which the sensing target moves from base station #1 to base station #2. The steps common to those of Fig. 15 and Fig. 17 are denoted by the same step numbers, and common description will be omitted.

In ST1560, the sensing processing using the BM for sensing is performed by UE #11, UE #12, UE #13, and base station #1. The transmitting base station is base station #1. The sensing-related UEs are UE #11, UE #12, and UE #13, for example, and the receiving UEs are UE #11 and UE #12, for example. The BM for sensing is continuously performed.

In ST1701 to ST1703, measurement of sensing BM is performed in the sensing-related UEs, and the measurement results are transmitted to base station #1. In ST1801, base station #1 determines whether or not transmitting base station change is initiated. The measurement results received from the sensing-related UEs may be used for the determination. For example, in a case where, for all the beams used for sensing BM, measurement values of all the sensing-related UEs are smaller than a predetermined threshold A1 (which may be equal to or smaller than the predetermined threshold A1, for example), base station #1 initiates the transmitting base station change. The predetermined threshold may be included in the sensing configuration information.

In ST1802, base station #1 transmits information indicating a request for the sensing BM configuration to a neighboring base station (indicated as base station #2 in the present figure). In ST1803, the neighboring base station that has received the request information performs the BM configuration for sensing in the base station itself. In ST1804, the neighboring base station transmits a response of the BM configuration for sensing to base station #1. The response may include the sensing BM configuration information.

In ST1811, base station #1 transmits the sensing BM configuration information of the neighboring base station to the sensing-related UEs. Base station #1 that has transmitted the configuration information may transmit information indicating that the sensing BM configuration information of the neighboring base station has been transmitted to the sensing-related UEs to the neighboring base station. In ST1815, the neighboring base station transmits BM resources being the sensing resources of the sensing resource set of sensing BM. In ST1812, base station #1 transmits the BM resources being the sensing resources of the sensing resource set of sensing BM.

In ST1821, the sensing-related UEs perform measurement of the sensing resources of the sensing resource set of sensing BM of each of the transmitting base station (base station #1) and the neighboring base station (base station #2). The sensing-related UEs may store the measurement results. In ST1822, the sensing-related UEs transmit the measurement results to base station #1.

In this manner, the transmitting base station (base station #1) can acquire the measurement results of the sensing resource set used for sensing BM of not only the base station itself but also the neighboring base station.

In ST1831, base station #1 determines whether or not transmitting base station change is initiated. The measurement results received from the sensing-related UEs may be used for the determination. For example, in a case where, for all the beams used for sensing BM of the transmitting base station (base station #1), measurement values of all the sensing-related UEs are smaller than a predetermined threshold B1 (which may be equal to or smaller than the predetermined threshold B1, for example), and for a certain beam of the neighboring base station (base station #2), a measurement value of a certain sensing-related UE is larger than a predetermined threshold C1 (which may be equal to or larger than the predetermined threshold C1, for example), base station #1 initiates the transmitting base station change. As another determination method, for example, when any one of the conditions is satisfied, base station #1 may initiate the transmitting base station change. The predetermined threshold may be included in the sensing configuration information. When there is a neighboring base station that satisfies the conditions, in ST1832, base station #1 determines to change the transmitting base station to the neighboring base station.

In ST1833, base station #1 transmits information indicating a transmitting base station change request to the transmitting base station after the change (base station #2 in the present figure). In ST1841, base station #2 that has received the information may determine the sensing-related UEs. The UEs under the base station itself may be determined as the sensing-related UEs. In ST1560, the sensing processing using the sensing BM by base station #2, UE #21, UE #22, and UE #23 is performed. The transmitting base station is changed to base station #2, the sensing-related UEs are changed to UE #21, UE #22, and UE #23, for example, and the receiving UEs are changed to UE #21 and UE #22, for example. In this manner, sensing BM is continuously performed.

In ST1845, base station #2 may transmit information indicating sensing termination to base station #1. For example, it may be transmitted when the sensing processing using sensing BM by base station #2 succeeds. In ST1570, the sensing processing by UE #11, UE #12, UE #13, and base station #1 terminates.

In this manner, even when the sensing target moves between base stations, the sensing processing using sensing BM can be continued in a movement target base station. The transmitting base station change request is performed between the base stations, and thus the transmitting base station can be changed early.

By employing such a method, even when the sensing target moves between cells, sensing BM can be performed, and accuracy of the sensing processing can be enhanced and the sensing target can be tracked.

### Fourth Embodiment

There are sensing technologies that do not use methods defined in 3GPP (which may be referred to as non-3GPP sensing), such as LiDAR, Radar, Wifi sensing, and Camera. The UE and the base station may include non-3GPP sensing sensors. In this manner, the UE and the base station can acquire sensing measurement results by non-3GPP sensing. It is required to incorporate such non-3GPP sensing measurement results acquired in the UE and the base station into a mobile communication NW (NPL 33). However, since no specific methods are disclosed, the non-3GPP sensing results cannot be incorporated into the mobile communication

### NW.

The present embodiment will disclose a method for solving such a problem.

The UE transmits information on support of non-3GPP sensing to the NF. The information may be included in the capability of the UE. The information is whether or not non-3GPP sensing is supported, a type of non-3GPP sensor to be supported, a type of non-3GPP sensing service to be supported, a type of target that can be sensed, non-3GPP sensing measurement results that can be acquired, or the like, for example. The NF may be a RAN, an AMF, an SF, or the like, for example. The UE may transmit the information on support of non-3GPP sensing to a management node. The management node may be a management service (MnS) or Operations, Administration and Management (OAM), for example.

In this manner, the NF and the management node can recognize the capability of non-3GPP sensing of the UE. For example, the NF and the management node that have received the information on support of non-3GPP sensing can identify the UE that can perform non-3GPP sensing.

The SF may manage non-3GPP sensing. As non-3GPP sensing management, for example, there are management of processing related to non-3GPP sensing, such as a non-3GPP sensing request, a non-3GPP sensing configuration, and non-3GPP sensing termination, and the like. The SF may have a function of a non-3GPP sensing server. By providing a function having the function of managing sensing, the sensing processing can be uniformly managed, and complexity of the sensing processing can be reduced.

The SF having the function of managing non-3GPP sensing may be provided separately from other functions in the NW. This can reduce complexity of processing, and can reduce malfunctions. As another method, the SF having the function of managing non-3GPP sensing may be included in other functions in the NW. This can facilitate cooperation with other functions, and can reduce a signaling amount.

The SF transmits the non-3GPP sensing request to the UE. In the request, information on the sensing service, information on the sensor type, information on the sensing target, and the like may be included. The SF transmits non-3GPP sensing configuration information indicating contents of the non-3GPP sensing configuration to the UE. In the non-3GPP sensing configuration information, the measurement configuration information and the report configuration information may be included. An identifier may be provided to the configuration information. The request may include the above-mentioned pieces of configuration information.

As another method, the base station may configure the non-3GPP sensing configuration. The base station may transmit the non-3GPP sensing configuration information to the UE. The base station may transmit the non-3GPP sensing configuration information to the SF, and the SF may transmit the non-3GPP sensing configuration information to the UE. For example, the base station can perform the non-3GPP sensing configuration while adjusting radio resources with another UE. This can enhance use efficiency of the radio resources. The UE may transmit a non-3GPP sensing configuration request to the base station. The base station that has received the request may perform the non-3GPP sensing configuration, and transmit the configuration information to the UE.

The SF may transmit the non-3GPP sensing configuration request to the base station. The base station that has received the request may perform the non-3GPP sensing configuration, and transmit the non-3GPP sensing configuration information to the SF. The SF may transmit the configuration information to the UE.

The non-3GPP sensing configuration information may include information on whether at least one of measurement and a report is periodic, aperiodic, or trigger-based, for example. In a periodic case, it may include information such as periodicity, an offset, and sensing duration. In a trigger-based case, it may include a condition for triggering at least one of the measurement and the report and a threshold used for the condition. The non-3GPP sensing configuration may be configured for each UE, may be configured for each UE group, or may be configured for each cell. A configuration taking account of resources used for communication can be performed. As another method, it may be configured for each sensing service, or may be configured for each sensor type. A configuration according to characteristics of the sensor or the like can be performed.

A measurement GAP may be provided (which may be referred to as an N3SMG) for non-3GPP sensing measurement. In the N3SMG, communication may not be performed. In the N3SMG, 3GPP sensing may not be performed. The non-3GPP sensing configuration may include information such as periodicity, an offset, and gap duration, for example. The N3SMG may be configured for each UE, may be configured for each UE group, or may be configured for each cell. A configuration taking account of resources used for communication can be performed. As another method, it may be configured for each sensing service, or may be configured for each sensor type. A configuration according to characteristics of the sensor or the like can be performed.

The SF may configure the N3SMG. The SF may transmit N3SMG configuration information to the UE. The N3SMG configuration information may be included in the non-3GPP sensing configuration information. The UE may transmit an N3SMG configuration request to the SF. The SF that has received the request may configure the N3SMG, and transmit the configuration information to the UE.

As another method, the base station may configure the N3SMG. The base station may transmit the N3SMG configuration information to the UE. The base station may transmit the N3SMG configuration information to the SF, and the SF may transmit the N3SMG configuration information to the UE. For example, the base station can configure the N3SMG while adjusting radio resources with another UE. This can enhance use efficiency of the radio resources. The UE may transmit the N3SMG configuration request to the base station. The base station that has received the request may configure the N3SMG, and transmit the configuration information to the UE.

The SF may transmit the N3SMG configuration request to the base station. The base station that has received the request may configure the N3SMG, and transmit the configuration information to the SF. The SF may transmit the configuration information to the UE.

By providing the measurement GAP for non-3GPP sensing measurement, coexistence with communication and the 3GPP sensing processing can be facilitated within the same NW.

The UE performs non-3GPP sensing measurement. The received non-3GPP sensing configuration may be used for the measurement. The UE stores the measurement results. Non-3GPP sensing by the UE is not limited to one, and may be a plurality of non-3GPP sensings. For example, non-3GPP sensing by a plurality of sensing services or a plurality of sensors may be performed. For example, a plurality of non-3GPP configurations may be performed for the UE. Sensing by a plurality of non-3GPP sensing configurations may be performed for the UE. The UE can acquire various sensing measurement results.

The SF may transmit a request for the non-3GPP sensing measurement results to the UE. The request may include information on the sensing service for which the measurement results are requested, information on the sensor type, and information on the sensing target. The request may include information on the non-3GPP sensing configuration for which the measurement results are requested, for example, an identifier thereof. In this manner, the UE can identify for which non-3GPP sensing measurement the received request of the measurement results is.

The UE transmits the non-3GPP sensing measurement results to the SF. The received non-3GPP sensing configuration may be used for transmission of the measurement results. The measurement results may include information on the measured sensing service, information on the sensor type, and information on the sensing target. The measurement results may include information on the measured non-3GPP sensing configuration, for example, an identifier thereof. In this manner, the SF can identify for which non-3GPP sensing measurement the received measurement results are.

The non-3GPP sensing measurement results may be transmitted together with the 3GPP sensing measurement results. The non-3GPP sensing measurement results may be included in the 3GPP sensing measurement results, or the 3GPP sensing measurement results may be included in the non-3GPP sensing measurement results. For example, when a non-3GPP sensing UE is a UE that performs 3GPP sensing (for example, a receiving UE), the UE may transmit the non-3GPP sensing measurement results and the 3GPP sensing measurement results together to the SF. In the measurement results transmitted together, information indicating the non-3GPP sensing measurement results or the 3GPP sensing measurement results may be included. The SF can recognize which measurement results the measurement results are. As a method of transmitting the 3GPP sensing measurement results, the methods disclosed in the first embodiment to the third embodiment and the fifth embodiment may be applied as appropriate.

The non-3GPP sensing configuration information may be transmitted together with the 3GPP sensing configuration information or 3GPP sensing BM configuration information. The non-3GPP sensing measurement results may be included in the 3GPP sensing configuration information or the 3GPP sensing BM configuration information, or the 3GPP sensing configuration information or the 3GPP sensing BM configuration information may be included in the non-3GPP sensing configuration information. For example, when a non-3GPP sensing UE is a UE that performs 3GPP sensing (for example, a receiving UE), the SF may transmit the non-3GPP sensing configuration information and the 3GPP sensing configuration information or the 3GPP sensing BM configuration information together to the UE. In the configuration information transmitted together, information indicating the non-3GPP sensing configuration information, the 3GPP sensing configuration information, or the 3GPP sensing BM configuration information may be included. The UE can recognize which piece of configuration information the configuration information is. As a method of transmitting the 3GPP sensing configuration information or the 3GPP sensing BM configuration information, the methods disclosed in the first embodiment to the third embodiment and the fifth embodiment may be applied as appropriate.

For transmission of the information on non-3GPP sensing between the UE and the SF, an interface between the UE and the SF may be used.

For transmission of the information on non-3GPP sensing between the UE and the base station, a Uu interface may be used.

For a method of transmitting the non-3GPP sensing configuration information from the transmitting base station to the UE, for example, RRC signaling may be used. For example, a new RRC message for non-3GPP sensing may be provided. For example, it may be included in an RRC reconfiguration (RRCReconfiguration) message for transmission. A large amount of information can be transmitted. As another transmission method, MAC signaling may be used. For example, new MAC signaling for non-3GPP sensing may be provided. For example, it may be included in a MAC CE for transmission. A MAC CE for non-3GPP sensing may be provided. For example, it may be included in a MAC PDU for transmission. A MAC PDU for non-3GPP sensing may be provided. This enables early transmission. As another transmission method, L1/L2 signaling may be used. For example, it may be included in DCI. For example, it may be transmitted on a PDCCH. DCI for non-3GPP sensing may be provided. This enables earlier transmission.

These transmission methods may be combined. For example, the RRC signaling may be used for transmission of the non-3GPP sensing configuration information, and the DCI may be used for transmission of a non-3GPP sensing measurement request. A large amount of information can be configured for the UE as the non-3GPP sensing configuration information, and transmission of activation/deactivation information of non-3GPP sensing measurement can be transmitted earlier. For example, measurement timing according to the non-3GPP sensing service can be flexibly controlled.

For a method of transmitting the non-3GPP sensing measurement results from the UE to the transmitting base station, for example, RRC signaling may be used. For example, a new RRC message for non-3GPP sensing may be provided. For example, it may be included in a measurement report (MeasurementReport) message for transmission. A large amount of information can be transmitted. As another transmission method, MAC signaling may be used. For example, new MAC signaling for non-3GPP sensing may be provided. For example, it may be included in a MAC CE for transmission. A MAC CE for non-3GPP sensing may be provided. For example, it may be included in a MAC PDU for transmission. A MAC PDU for non-3GPP sensing may be provided. This enables early transmission. As another transmission method, L1/L2 signaling may be used. For example, it may be included in UCI. For example, it may be transmitted on a PUCCH. For example, it may be transmitted on a PUSCH. UCI for non-3GPP sensing may be provided. This enables earlier transmission.

The SF derives the sensing results. The sensing results may be derived by using the non-3GPP sensing measurement results received from the UE. The SF may store the measurement results received from the UE. The SF may store the derived sensing results.

The measurement results and the sensing results may be stored in association with information of the UE that has performed the measurement. As another method, for example, they may be stored in association with the non-3GPP sensing configuration information, the information on the sensing service, or the information on the sensor type. The SF can manage the measurement results and the sensing results. For example, when a predetermined sensing service is requested from another NF, an AF, or an external storage apparatus, the sensing results of the sensing service can be identified, and the sensing results of the sensing service can be transmitted to such another NF, an AF, or an external storage apparatus that has performed the request.

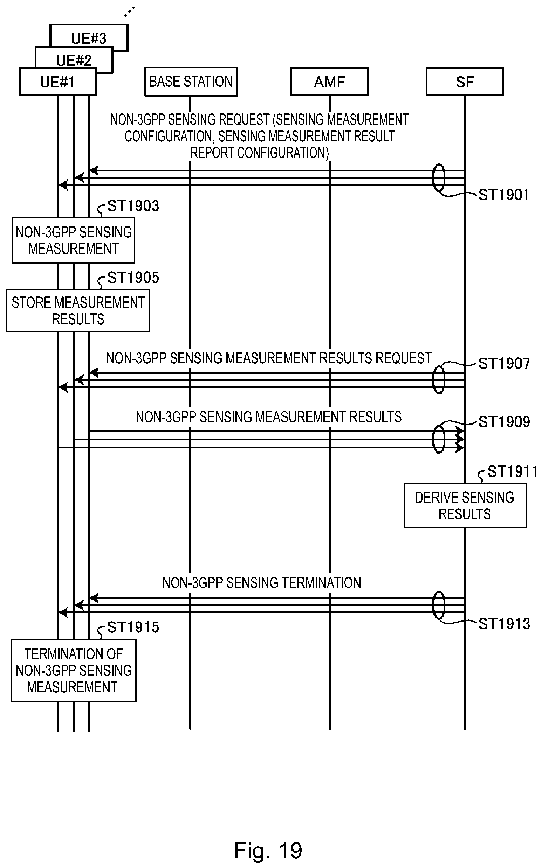

Fig. 19 is a diagram illustrating a sequence example of non-3GPP sensing processing. In ST1901, the SF transmits information indicating the non-3GPP sensing request to the UEs (UE #1, UE #2, and UE #3) that perform non-3GPP sensing. In ST1903, the non-3GPP sensing UEs that have received the request information perform non-3GPP sensing measurement. For the measurement, the non-3GPP sensing measurement configuration received from the SF may be used. In ST1905, the non-3GPP sensing UEs store the measurement results.

In ST1907, the SF transmits information indicating a request for the non-3GPP sensing measurement results to the non-3GPP sensing UEs. In ST1909, the non-3GPP sensing UEs that have received the request information transmit the non-3GPP sensing measurement results. For the transmission, the report configuration of the non-3GPP sensing measurement results received from the SF may be used. In this manner, the SF can acquire the non-3GPP sensing measurement results measured by the non-3GPP sensing UEs.

In ST1911, the SF derives the sensing results of non-3GPP sensing. The received non-3GPP sensing measurement results may be used for the derivation. In this manner, the SF can derive the sensing results of non-3GPP sensing by using the non-3GPP sensing measurement results measured by the non-3GPP sensing UEs.

In ST1913, the SF transmits information indicating non-3GPP sensing termination to the non-3GPP sensing UEs. In ST1915, the non-3GPP sensing UEs terminate non-3GPP sensing measurement. The non-3GPP sensing measurement configuration and the report configuration may be released. In this manner, continuation of unnecessary measurement by the non-3GPP sensing UEs can be avoided.

A non-3GPP sensing measurement request may be provided. A non-3GPP sensing measurement start request and a non-3GPP sensing measurement termination request may be provided. Activation/deactivation information of non-3GPP sensing measurement may be provided. For example, the activation/deactivation information of non-3GPP sensing measurement may be included in the non-3GPP sensing measurement request. In a case of activation, non-3GPP sensing measurement start may be indicated, and in a case of deactivation, non-3GPP sensing measurement termination may be indicated. These may be provided separately from the non-3GPP sensing request, the non-3GPP sensing measurement configuration, and the non-3GPP sensing termination.

To the UE, the SF may transmit the non-3GPP sensing measurement configuration by the non-3GPP sensing request in advance and then transmit the non-3GPP sensing measurement request. The UE does not perform non-3GPP sensing upon reception of the non-3GPP sensing measurement configuration, and performs non-3GPP sensing measurement when receiving activation by the non-3GPP sensing measurement request. To the UE, the SF may transmit the non-3GPP sensing measurement request before transmitting the non-3GPP sensing termination. The UE may terminate non-3GPP sensing measurement when receiving deactivation by the non-3GPP sensing measurement request. The UE may maintain the sensing measurement configuration and the sensing measurement result report configuration configured by the non-3GPP sensing request until reception of the non-3GPP sensing termination, and release these configurations upon reception of the non-3GPP sensing termination. In this manner, flexible control of non-3GPP sensing measurement can be performed.

The base station may transmit information necessary for non-3GPP sensing to the UE. The SF transmits information for assisting non-3GPP sensing to the base station. The information may be for each UE, may be for each UE group, or may be for each cell, for example. For example, it may be for each sensing service, or may be for each sensor type. For example, it may be for each non-3GPP sensing configuration. The base station transmits the information for assisting non-3GPP sensing to the UE. As the information for assisting non-3GPP sensing, for example, there are information indicating a relationship between time information used in non-3GPP sensing and time information used in the NW and the like. As the transmission method, UE-specific signaling may be used, or it may be included in a SIB for broadcasting. As the UE-specific signaling, RRC signaling may be used, or MAC signaling may be used. It may be included in DCI for transmission on a PDCCH. The UE can acquire the information for assisting non-3GPP sensing.

In this manner, even when the UE includes a non-3GPP sensing sensor, the UE can acquire the sensing measurement results and the sensing results by non-3GPP sensing, and these results can be incorporated into the mobile communication NW.

The base station may transmit the information on support of non-3GPP sensing to the UE or the NF. The NF may be a RAN, an AMF, an SF, or the like, for example. The RAN may be another base station. The base station may transmit the information on support of non-3GPP sensing to a management node. The management node may be an MnS or OAM, for example.

In this manner, the NF and the management node can recognize the capability of non-3GPP sensing of the base station. For example, the NF and the management node that have received the information on support of non-3GPP sensing can identify the base station that can perform non-3GPP sensing.

The SF may transmit the non-3GPP sensing request to the base station. The SF may transmit the non-3GPP sensing configuration to the base station.

The SF may configure the N3SMG. The SF may transmit the N3SMG configuration information to the base station. The N3SMG configuration information may be included in the non-3GPP sensing configuration information. The base station may transmit the N3SMG configuration request to the SF. The SF that has received the request may configure the N3SMG, and transmit the configuration information to the base station. The base station may configure the N3SMG. The base station may transmit the N3SMG configuration information to the SF. The SF may transmit the N3SMG configuration request to the base station. The base station that has received the request may configure the N3SMG, and transmit the configuration information to the SF. For example, the SF may derive the N3SMG to be configured for one or a plurality of base stations by using the N3SMG from a plurality of base stations. The SF may transmit the configuration information to the base station.

The base station may perform non-3GPP sensing measurement. The received non-3GPP sensing configuration may be used for the measurement. The base station stores the measurement results. Non-3GPP sensing by the base station is not limited to one, and may be a plurality of non-3GPP sensings. For example, non-3GPP sensing by a plurality of sensing services or a plurality of sensors may be performed. For example, a plurality of non-3GPP configurations may be performed for the base station. The base station may perform sensing by a plurality of non-3GPP sensing configurations. The base station can acquire various sensing measurement results.

The SF may transmit a request for the non-3GPP sensing measurement results to the base station. The request may include information on the sensing service for which the measurement results are requested, information on the sensor type, and information on the sensing target. The request may include information on the non-3GPP sensing configuration for which the measurement results are requested, for example, an identifier thereof. In this manner, the base station can identify for which non-3GPP sensing measurement the received request of the measurement results is.

The base station transmits the non-3GPP sensing measurement results to the SF. The received non-3GPP sensing configuration may be used for transmission of the measurement results. The measurement results may include information on the measured sensing service, information on the sensor type, and information on the sensing target. The measurement results may include information on the measured non-3GPP sensing configuration, for example, an identifier thereof. In this manner, the SF can identify for which non-3GPP sensing measurement the received measurement results are.

For transmission of the information on non-3GPP sensing between the base station and the SF, an interface between the base station and the SF may be used.

It has been disclosed that the SF derives the non-3GPP sensing results from the non-3GPP sensing measurement results; however, the UE or the base station may derive the non-3GPP sensing results from the non-3GPP sensing measurement results. The UE or the base station may transmit the derived non-3GPP sensing results to the SF. Even when the UE or the base station derives the non-3GPP sensing results, the non-3GPP sensing results can be incorporated into the NW.

It has been disclosed that the function of managing non-3GPP sensing is provided in the SF; however, as another method, the function of managing non-3GPP sensing may be provided separately from the function of managing 3GPP sensing. For example, it may be referred to as an N3SF. By providing the N3SF separately from the SF, processing optimized for non-3GPP sensing can be performed.

The N3SF having the function of managing non-3GPP sensing may be provided separately from other functions in the NW. This can reduce complexity of processing, and can reduce malfunctions. As another method, the N3SF having the function of managing non-3GPP sensing may be included in other functions in the NW. This can facilitate cooperation with other functions, and can reduce a signaling amount.

In this manner, even when the base station includes a non-3GPP sensing sensor, the base station can acquire the sensing measurement results and the sensing results by non-3GPP sensing, and these results can be incorporated into the mobile communication NW. In these methods, the methods disclosed above may be applied as appropriate, unless otherwise specifically noted.

The NW can incorporate the sensing measurement results and the sensing results by non-3GPP sensing by the UE or the base station. For example, as disclosed in the first embodiment, the NW can incorporate the sensing results by sensing using the technologies defined in 3GPP. The NW may combine these various sensing measurement results and sensing results. Various sensing services requested by another NF, an AF, or an external storage apparatus can be provided.

### Fifth Embodiment

In the sensing processing using the CP, it is difficult to control performance such as the KPI required for sensing. In order to control the performance, it is proposed that the UP capable of quality of service (QoS) management is used for the sensing processing (NPL 34). It is disclosed that a PDU session is established as UP connection. However, specific processing methods therefor, such as how to establish the PDU session in the sensing processing, are not disclosed. Thus, there is a problem that the UP cannot be used in the sensing processing.

The present embodiment will disclose a method for solving such a problem.

The UP is used for the sensing processing. UP connection may be established between the UE and the SF. The PDU session may be established between the UE and the SF. The PDU session may be established via the UPF. A sensing message between the UE and the SF may be transmitted and received by using the UP connection established between the UE and the SF. As the sensing message, not only a 3GPP sensing message but also a non-3GPP sensing message may be transmitted and received.

A UP connection establishment method will be disclosed. A UP connection establishment function is provided in the NF in a core network (CN). The NF may be the SF. The SF may have the UP connection establishment function. It may be another NF. For example, a function having the UP connection establishment function may be newly provided. By providing the new function, for example, the function can be directly accessed by an external storage apparatus, an application function (AF), a network data analytics function (NWDAF), or the like, and an increase in delay due to an increase in a load with other processing can be avoided.

As another method, the UP connection establishment function may be provided outside the CN. For example, the UP connection establishment function outside the CN may initiate UP connection establishment processing for the SF. An interface may be provided between the function outside the CN and the SF. Communication between the function outside the CN and the SF may be performed by using the interface.

As described above, the sensing target may not be the UE. This makes it unclear as to with which UE the UP connection is to be established, and inhibits the use of the UP in sensing. Here, a method for solving the problem will be disclosed.

The UP connection is established by using the receiving UE. The UP connection is established between the receiving UE and the SF. The PDU session may be established between the receiving UE and the SF. One receiving UE may be provided, or a plurality of receiving UEs may be provided. In this manner, the sensing measurement results measured by the receiving UE can be transmitted to the SF by using the UP.

Another method will be disclosed. The UP connection is established by using the UE performing sensing BM. The UP connection is established between the UE performing sensing BM and the SF. The PDU session may be established between the UE performing sensing BM and the SF. One UE may be provided, or a plurality of UEs may be provided. In this manner, even when the receiving UE is dynamically changed in the UEs by sensing BM, the sensing measurement results measured by the receiving UE can be transmitted to the SF early by using the UP.

Another method will be disclosed. A master UE is provided. The master UE may be the receiving UE, or may not be the receiving UE. The master UE may be personal IoT network (PIN) elements with gateway capability (PEGC)/PIN elements with management capability (PEMC) (see NPL 36 TR 23.700-88). The master UE has a function of collecting the sensing measurement results. The master UE has a function of connecting to the UE performing sensing BM or the receiving UE. An inter-UE interface may be used for the connection. For example, PC5 may be used. A sensing message is transmitted and received between the UE performing sensing BM or the receiving UE and the master UE. The master UE is not limited to one, and may be a plurality of master UEs. For example, when all the UEs performing sensing BM or all the receiving UEs cannot connect to one master UE, a plurality of master UEs may be provided such that all the UEs performing sensing BM or all the receiving UEs can connect to any one of the master UEs. The sensing measurement results of all the receiving UEs can be collected.

The UP connection is established between the master UE and the SF. The PDU session may be established between the master UE and the SF. In this manner, the sensing measurement results collected by the master UE can be transmitted to the SF by using the UP. For example, when a large number of receiving UEs perform sensing, a large number of PDU sessions need not be established. This can reduce complexity of processing using the UP connection for sensing.

As a method of determining the UE performing sensing BM or the receiving UE, for example, the method disclosed in the first embodiment may be applied as appropriate.

It has been disclosed that the UP connection is established by using the UE performing sensing BM or the receiving UE. The UE performing sensing BM or the receiving UE individually establishes the PDU session. When there are a plurality of UEs performing sensing BM or receiving UEs, a plurality of PDU sessions are established. The plurality of PDU sessions may be associated. For example, association information may be included in information on the PDU sessions. For example, when a plurality of PDU sessions are established for the same sensing service, association information indicating that they are for the same sensing service may be included in the information on the PDU sessions. For example, when a plurality of PDU sessions are established for the same sensing request or the like, the information on the PDU sessions may include association information indicating that they are for the same sensing request. For example, the SF can recognize that the sensing measurement results received by using the PDU sessions are the measurement results for the same sensing service or the same sensing request.

In sensing, QoS different from that for communication is required. A method of configuring QoS used for sensing will be disclosed.

14 examples of information on sensing QoS will be disclosed below.
(1) Horizontal accuracy of location information.
(2) Vertical accuracy of location information.
(3) Response time of location information.
(4) Information indicating whether or not velocity is required.
(5) Velocity accuracy.
(6) Resolution.
(7) Range resolution.
(8) Velocity resolution.
(9) Amount of delay.
(10) Sensing service delay.
(11) Refresh rate.
(12) Missing detection rate.
(13) False alarm rate.
(14) Combination of (1) to (13).

A method of configuring the QoS will be disclosed. The SF receives information on the QoS required for sensing (which may be referred to as sensing QoS) from an external apparatus, an AF (which may be a sensing AF to be described later), or a network exposure function (NEF). It may be an indicator such as the KPI required for sensing. For example, the external apparatus, the AF, or the NEF may include the information or the indicators in the sensing request for transmission to the SF. The SF may derive information on the sensing QoS used in the NW from the indicators such as the KPI required for sensing.

The SF transmits the information on the sensing QoS to the receiving node. The SF may transmit the information on the sensing QoS to the receiving UE, for example. The SF may transmit the information on the sensing QoS to the transmitting node. The SF may transmit the information on the sensing QoS to the transmitting base station, for example. The SF may transmit the information on the sensing QoS to the base station serving the receiving UE. The SF may transmit the information on the sensing QoS to the AMF. The AMF may transmit the information on the QoS to the transmitting base station and/or the base station serving the receiving UE. In this manner, the receiving UE, the transmitting base station, the base station serving the receiving UE, and the AMF can recognize the QoS required for sensing. For example, the sensing configuration and sensing measurement can be performed such that the QoS is satisfied.

The SF may transmit the information on the sensing QoS to the SMF or the UPF. The SF may transmit the information on the QoS via the AMF. The SMF or the UPF that has received the information on the sensing QoS can use the information on the QoS for data transmission control in the PDU session, for example. More appropriate control can be performed such that the QoS required for sensing is satisfied.

The SMF or the UPF may derive the information on the sensing QoS used in the NW from the indicators such as the KPI required for sensing. For example, the SF may transmit the KPI required for sensing to the SMF or the UPF. The SMF or the UPF can derive the information on the sensing QoS by using the KPI required for sensing. For example, this is effective when the sensing measurement results are transmitted by using the UP. The SMF may transmit the information on the QoS to the UPF or the receiving UE. The UPF may transmit the information on the QoS to the receiving UE. The SMF or the UPF may transmit the information on the QoS to the transmitting base station or the base station serving the receiving UE. It may be transmitted via the AMF. In this manner, the receiving UE, the transmitting base station, and the base station serving the receiving UE can recognize the QoS required for sensing. For example, transmission of sensing measurement in the UP can be performed such that the QoS is satisfied.

The NEF may derive the information on the sensing QoS used in the NW from the indicators such as the KPI required for sensing. For example, an external apparatus or the AF may transmit the KPI required for sensing to the NEF. The NEF can derive the sensing QoS used in the NW by using the KPI. The NEF may transmit the derived information on the sensing QoS to the PCF or the UDM.

The sensing AF may be provided. The sensing AF may derive the information on the sensing QoS used in the NW from the indicators such as the KPI required for sensing. For example, an external apparatus or the AF may transmit the KPI required for sensing to the sensing AF. The sensing AF can derive the sensing QoS used in the NW by using the KPI. For example, a table for converting the KPI used in the sensing service into the sensing QoS used in the NW may be provided to the sensing AF. This facilitates the conversion. The sensing AF may transmit the derived information on the sensing QoS to the NEF. The NEF may transmit the information on the QoS to the PCF or the UDM. The sensing AF may transmit the information on the sensing QoS to the PCF or the UDM. This can simplify the processing.

An AF supporting various services (which is referred to as a unified AF, for example) may be provided. The unified AF may derive the information on the sensing QoS used in the NW from the indicators such as the KPI required for sensing. The unified AF may derive the information on the QoS used in the NW from the indicators such as the KPI required not only for the sensing service but also for other services. An external apparatus or the AF may transmit the KPI required for each service to the unified AF. The unified AF can derive the QoS for each service used in the NW by using the KPI required for each service. A table for converting the KPI used in each service into the QoS for each service used in the NW may be provided to the unified AF. This facilitates the conversion. The unified AF may transmit the derived information on the QoS for each service to the NEF. The NEF may transmit the information on the QoS to the PCF or the UDM. The unified AF may transmit the information on the QoS for each service to the PCF or the UDM. This can simplify the processing. By providing the unified AF having the function of deriving the information on the QoS used in the NW from the indicators such as the KPI required for various services, communication need not be performed for different AFs for each service. For example, the NW can easily provide services combining a plurality of services.

The SMF may request the information on the sensing QoS from the PCF or the UDM. The PCF or the UDM may provide the QoS to the SMF. The information on the QoS required for sensing may be a QoS rule required for sensing, for example. The QoS rule required for sensing may be derived by the PCF. Provision of the information on the QoS to the SMF may be performed in PDU session establishment processing, for example. The SMF may transmit the information on the QoS to the UPF or the receiving UE. The UPF may transmit the information on the QoS to the receiving UE. The SMF or the UPF may transmit the information on the QoS to the transmitting base station or the base station serving the receiving UE. It may be transmitted via the AMF. In this manner, the receiving UE, the transmitting base station, and the base station serving the receiving UE can recognize the QoS required for sensing. For example, transmission of sensing measurement in the UP can be performed such that the QoS is satisfied.

The information on the QoS required for sensing may be measured. The receiving UE, the transmitting base station, the base station, the AMF, the SMF, the UPF and/or the SF may measure a part or all of the information. As another method, any one of the nodes, for example, the SF, may derive the measurement results of the information on the QoS required for sensing. From the measurement results, whether or not the QoS required for sensing is satisfied can be determined. In order to satisfy the QoS required for sensing, the SF can perform more appropriate control, such as the change of the transmitting base station and the change of the receiving UE, for example, by using the determination.

When another node derives the measurement results of the information on the QoS required for sensing, the node may transmit determination results as to whether or not the QoS required for sensing is satisfied to the SF. The node may request change information of a desired control indicators, such as the change of the transmitting base station and the change of the receiving UE, for example, to the SF. In order to satisfy the QoS required for sensing, the SF may perform more appropriate control, such as the change of the transmitting base station and the change of the receiving UE, for example, by using the determination results and the change information of the desired control indicators.

The SF may request a part or all of the nodes to measure a part or all of the information on the sensing QoS. The request may include information indicating the information on the sensing QoS to be measured, for example. The request may include the measurement configuration information, for example. The measurement configuration information may be measurement periodicity or the like, for example. The request may include the report configuration information of the measurement results, for example. The report configuration information may be information indicating whether the report is periodic or event-triggered, for example. For example, it may be information on report periodicity or a report event. The node that has received the request may transmit the report of the measurement results to the SF. In order to satisfy the QoS required for sensing, the SF can perform more appropriate control, such as the change of the transmitting base station and the change of the receiving UE, for example.

The SMF may request a part or all of the nodes to measure a part or all of the information on the sensing QoS. The node that has received the request may transmit the report to the SF. For example, the SMF may request the UPF to measure a part or all of the information on the sensing QoS. The UPF may transmit the report of the measurement results to the SMF. Measurement of the information on the sensing QoS can be performed in the UPF used for the PDU session established for sensing.

A plurality of QoSs required for sensing may be provided. Priorities may be provided to the plurality of QoSs. For example, primary QoS and secondary QoS may be provided. When the QoS required for sensing having a high priority is not satisfied, control may be performed such that the QoS required for sensing having the next priority is satisfied. For example, when the SF determines that the primary QoS is not satisfied, the SF performs a configuration change to the secondary QoS. In this manner, even if the sensing capability deteriorates in a poor environment, a stop in the sensing processing can be avoided by changing to the QoS having a low priority. The sensing processing can be continued with the QoS having a low priority.

In this manner, the QoS required for sensing can be configured. Even when the QoS required for sensing is different from the QoS required for communication, the sensing processing is performed to satisfy the QoS required for sensing. The indicators such as the KPI required for sensing can be satisfied.

The method disclosed above may be used not only for 3GPP sensing but also for non-3GPP sensing. Even when a non-3GPP sensing message is transmitted and received by using the UP connection established between the UE and the SF, the sensing processing is performed to satisfy the QoS required for non-3GPP sensing. The indicators such as the KPI required for non-3GPP sensing can be satisfied.

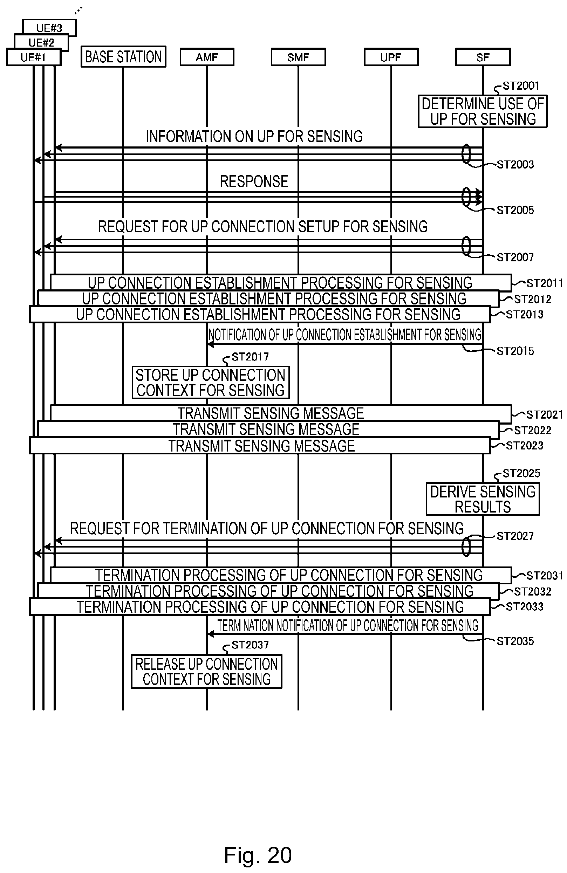

Fig. 20 is a diagram illustrating a sequence example of the sensing processing using the UP. A method in which the sensing-related UEs individually establish sensing UP connection will be disclosed.

The SF determines use of UP connection for sensing. In ST2001, the SF determines use of UP connection for sensing. For example, it may be determined based on an increase in a load of the CP or the like. The SF may acquire load information from the AMF or a gNB-CU. The SF may determine the increase in the load of the CP by using the information. In ST2003, the SF transmits information on the UP to the sensing-related UEs. The information may be an address of the SF or security-related information, for example. The transmission may be performed via the AMF. NAS signaling may be used between the AMF and the UE.

In ST2005, the sensing-related UEs may transmit a reception response to the information on the UP for sensing to the SF. The response may include, for example, information on a UP sensing-related PDU session. The information may be IP addresses of the UEs, MAC addresses of the UEs, UE identifiers, or the like of the sensing-related UEs, for example. For example, it may be information on an individual data network (DN) used for sensing, for example, a data network name (DNN). For example, it may be information on slicing used for sensing, for example, single network slice selection assistance information (S-NSSAI). The transmission may be performed via the AMF. NAS signaling may be used between the AMF and the UE.

The information on the UP sensing-related PDU session may be acquired from the PCF. The information on the sensing-related PDU session may be included in a UE route selection policy (URSP). The URSP may be used for the response. The UE may acquire the URSP from the PCF in advance.

In ST2007, the SF transmits information indicating a setup request for the UP connection to the sensing-related UEs. For the transmission, the IP addresses of the UEs received from the sensing-related UEs may be used. The transmission may be performed via the AMF.

In ST2011, ST2012, and ST2013, each sensing-related UE transmits a request for establishing UP connection for sensing with the SF. By the request, PDU session establishment processing for sensing is performed between each sensing-related UE, the base station, the AMF, the SMF, the UPF, the PCF, the UDM, and the SF. As the PDU session establishment processing, processing described in NPL 35 (TS 23.502 (clause 4.3.2.2)) may be applied as appropriate. In the PDU session establishment processing for sensing, the address of the SF may be used. When the address of the SF is a fully qualified domain name (FQDN), a domain name system (DNS) server or a resolver may be used for derivation of the IP address of the SF. The DNS server or the resolver may be an edge application server discovery function (EASDF), or a local DNS for local SF address resolution. The UE may include the address of the SF in the sensing PDU session establishment request for transmission. In the sensing PDU session establishment processing, for interface establishment processing between the SF and the UPF, a method of establishing an N6 interface between the DN and the UPF may be applied as appropriate.

In ST2015, the SF notifies the AMF that the sensing UP connection is established between each sensing-related UE and the SF. In ST2017, the AMF stores information on the sensing UP connection in a UE context of each sensing-related UE. The AMF can recognize that each sensing-related UE establishes the sensing UP connection with the SF.

In ST2021 to ST2023, a sensing message is transmitted and received by using the sensing UP connection established between each sensing-related UE and the SF. The sensing message may be assistance data for sensing, may be a sensing request, may be a sensing capability, may be a sensing configuration, may be sensing measurement results, or may be sensing results, for example. The sensing message can be transmitted and received by using the UP connection.

In the sensing UP connection, a priority may be provided according to the type of sensing message. For example, transmission and reception of the sensing measurement results may be prioritized over transmission and reception of the sensing assistance data, the sensing request, the sensing capability, or the sensing configuration. The sensing measurement results can be transmitted and received early, and derivation of the sensing results can be performed with low delay.

According to the type of sensing message, whether transmission and reception are performed by using the sensing UP connection or transmission and reception are performed by using the CP may be differentiated. For example, the sensing UP connection may be used for transmission and reception of the sensing measurement results, and the CP may be used without using the sensing UP connection for transmission and reception of the sensing assistance data, the sensing request, the sensing capability, or the sensing configuration. In the CP, transmission and reception may be performed by signaling using interfaces between the nodes. The amount of data transmitted and received by using the sensing UP connection can be reduced.

In ST2025, the SF may derive the sensing results by using the sensing measurement results acquired using the sensing UP connection from the sensing-related UEs.

A sequence example of terminating sensing will be disclosed. In ST2027, the SF transmits information indicating a termination request for the sensing UP connection to the sensing-related UEs. In ST2031, ST2032, and ST2033, each sensing-related UE transmits a request to release the sensing PDU session. By the request, sensing PDU session release processing is performed between each sensing-related UE, the base station, the AMF, the SMF, the UPF, the PCF, the UDM, and the SF. As the PDU session release processing, processing described in NPL 35 (TS 23.502 (clause 4.3.4)) may be applied as appropriate.

It has been disclosed that the sensing-related UEs transmit a sensing PDU session release request; however, as another method, another NF may transmit the sensing PDU session release request. For example, the AMF, the SMF, the PCF, or the like may transmit the sensing PDU session release request. The SF may transmit information indicating a sensing UP connection termination request to the NF.

In ST2035, the SF transmits a sensing UP connection termination notification to the AMF. In ST2037, the AMF releases the context related to the sensing UP connection from the context of each sensing-related UE. The AMF can recognize that each sensing-related UE does not establish the sensing UP connection. The AMF can manage an establishment state of the sensing UP connection in each sensing-related UE.

The UE or another NF may request the SF to use the UP connection for sensing. The SF that has received the request may determine whether to perform the sensing processing using the UP disclosed above. For example, the UE or another NF can request the sensing processing using the UP according to a signaling load of its own and a UP connection state. The sensing processing more suitable for the NW can be performed.

When the UE requests the SF to use the UP connection for sensing, the information on the UP sensing-related PDU session may be included in the request. Accordingly, transmission of the reception response to the information on the sensing UP from the UE to the SF (for example, ST2005) and transmission of the information indicating the setup request for the UP connection from the SF to the UE (for example, ST2007) may be omitted. This can reduce a signaling amount. The UE may transmit a request to use the UP connection for sensing to the SF via the AMF. The AMF may perform selection of the SF. The AMF may transmit the request to use the UP connection for sensing to the SF to a service communication proxy (SCP). The SCP that has received the request may perform selection of the SF and routing.

The UE or another NF may request the SF to perform sensing UP connection termination. The SF that has received the request may determine the sensing UP connection termination processing disclosed above. For example, the UE or another NF can request the sensing UP connection termination according to a signaling load of its own and a UP connection state. The sensing processing more suitable for the NW can be performed.

The UE or the NF may initiate the sensing PDU session release processing. The SF may transmit an initiation request for the sensing PDU session release processing to the UE or the NF. The UE or the NF that has received the request may initiate the sensing PDU session release processing. For example, the UE or another NF can initiate the sensing PDU session release processing according to a signaling load of its own and a UP connection state. The sensing processing more suitable for the NW can be performed.

The SF may determine modification of the sensing UP connection. For example, modification of the sensing QoS or the like may be determined. The SF transmits information on the modified sensing UP to the UE. The UE may transmit a reception response to the information on the sensing UP to the SF. The reception response may include information on the modified UP sensing-related PDU session. The SF transmits information indicating a modification request for the UP connection to the UE. The UE transmits a request for sensing UP connection modification with the SF. By the request, sensing PDU session modification processing is performed between the UE, the base station, the AMF, the SMF, the UPF, the PCF, the UDM, and the SF. As the PDU session modification processing, processing described in NPL 35 (TS 23.502 (clause 4.3.3)) may be applied as appropriate.

The UE or another NF may request the SF to modify the sensing UP connection. The SF that has received the request may determine modification of the sensing UP connection. For example, the UE or another NF can request modification processing for the sensing UP connection using the UP according to a signaling load of its own and a UP connection state. The sensing processing more suitable for the NW can be performed.

The UE or the NF may initiate sensing PDU session modification processing. The SF may transmit an initiation request for the sensing PDU session modification processing to the UE or the NF. The UE or the NF that has received the request may initiate the sensing PDU session modification processing. For example, the UE or another NF can initiate the sensing PDU session modification processing according to a signaling load of its own and a UP connection state. The sensing processing more suitable for the NW can be performed.

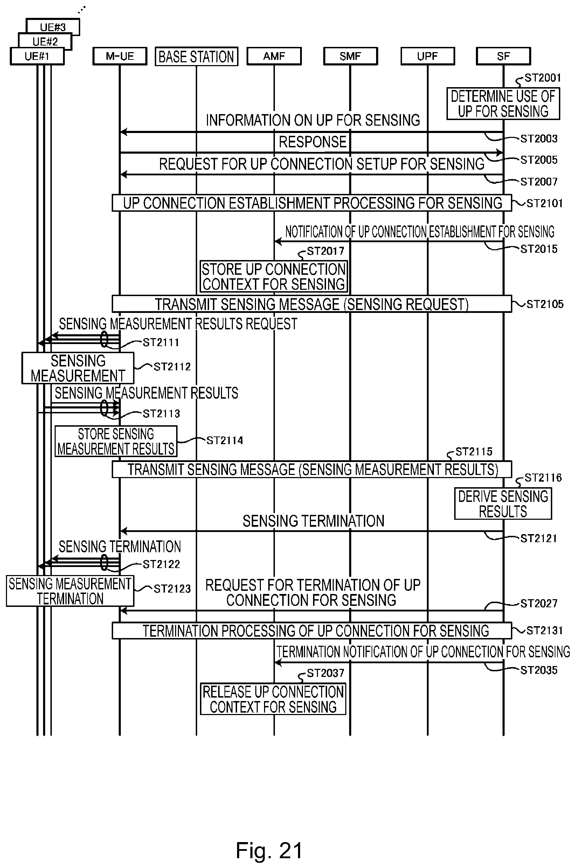

Fig. 21 is a diagram illustrating another sequence example of the sensing processing using the UP. An example of establishing sensing UP connection between the master UE and the SF will be disclosed. The steps common to those of Fig. 20 are denoted by the same step numbers, and common description will be omitted.

The SF that has determined to use UP connection for sensing in ST2001 establishes sensing UP connection with the master UE in ST2003, ST2005, ST2007, and ST2101. The processing of ST2101 may be applied as appropriate, with the processing of ST2011 being replaced with that by the master UE, for example. In this manner, the sensing PDU session is established between the master UE and the SF, and the sensing UP connection is established.

In ST2105, a sensing message is transmitted and received between the UE and the SF by using the sensing UP connection. For example, it may be a sensing request.

In ST2111, the master UE that has received the sensing request transmits information indicating a request for sensing measurement to the sensing-related UEs (UE #1, UE #2, and UE #3) included in the request. The request information may include the sensing configuration information received from the SF. The sensing-related UEs perform sensing measurement. When the master UE is the sensing-related UE, the master UE may also perform sensing measurement. In ST2123, the sensing-related UEs transmit the sensing measurement results to the master UE. In ST2114, the master UE may store the sensing measurement results.

In ST2115, the master UE transmits the sensing measurement results as a sensing message by using the sensing UP connection established with the SF. In ST2116, the SF derives the sensing results. For the derivation, the received sensing measurement results may be used. In this manner, the SF can acquire the sensing measurement results from the sensing-related UEs, and can derive the sensing results. The SF may use the sensing UP connection with the master UE, and complexity of the sensing processing can be avoided.

A sequence example of terminating sensing will be disclosed. In ST2121, the SF transmits information indicating sensing termination to the master UE. In ST2122, the master UE that has received the termination information transmits the information indicating the sensing termination to the sensing-related UEs. In ST2123, the sensing-related UEs that have received the termination information terminate sensing measurement. When the master UE is the sensing-related UE, the master UE may also terminate sensing measurement.

In ST2027, the SF transmits information indicating a termination request for the sensing UP connection to the master UE. In ST2131, the master UE transmits a request to release the sensing PDU session. The processing of ST2131 may be applied as appropriate, with the processing of ST2031 being replaced with that by the master UE, for example. In this manner, the sensing PDU session is released between the master UE and the SF, and the sensing UP connection terminates.

In this manner, the UP can be used for the sensing processing. By using the sensing UP connection, QoS management in the sensing PDU session can be applied. By managing the sensing QoS, control for achieving performance such as the KPI required for sensing can be performed.

In the Specification, the node may be a function. The node may be an entity.

Although the Specification provides a description of the base station, it may be a RAN node unless otherwise specifically noted. It may be a RAN node TRP, or may be a transmission point (TP). The RAN node may be a CU, or may be a DU. The RAN node may be an IAB node. The RAN node may be a DU of an IAB node.

In the Specification, the UE may be an IAB node. The UE may be a mobile termination (MT) of an IAB node.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell,
- 1100: Learning apparatus,
- 1110, 1210: Data acquisition unit,
- 1120: Model generation unit,
- 1121: Reward calculation unit,
- 1122: Function update unit,
- 1130: Learned model storage unit,
- 1200: Inference apparatus,
- 1220: Inference unit.

## Claims

1. A communication system comprising:
a base station supporting a fifth generation radio access system; and
a communication terminal configured to connect to the base station, wherein
sensing processing using a sensing beam is performed between a transmitting base station being the base station that transmits a sensing resource and a receiving communication terminal being the communication terminal that receives the sensing resource,
the communication terminal performing sensing beam management processing is configured to measure a sensing resource set including one or a plurality of the sensing resources corresponding to one or more candidates of the sensing beam, and transmit a measurement result to the transmitting base station, and
the transmitting base station is configured to determine the sensing beam based on the measurement result, and notify the receiving communication terminal of the determined sensing beam.

2. The communication system according to claim 1, wherein
after performing handover processing, the receiving communication terminal is configured to notify the base station being a handover target that the communication terminal is the receiving communication terminal,
the base station being the handover target is configured to notify a sensing function that manages sensing that the receiving communication terminal has performed a handover, and
the sensing function is configured to notify the base station being a handover source of a change of the communication terminal performing the sensing beam management processing.

3. The communication system according to claim 1 or 2, wherein
a sensing function that manages sensing is configured to determine whether or not a change of the transmitting base station is necessary due to movement of a sensing target.

4. The communication system according to claim 1 or 2, wherein
when the measurement result satisfies a predetermined condition, the transmitting base station is configured to determine to change the transmitting base station, and
the transmitting base station before the change is configured to transmit a transmitting base station change request to the transmitting base station after the change.

5. A communication system comprising:
a base station supporting a fifth generation radio access system; and
a communication terminal configured to connect to the base station, wherein
the communication terminal has a function of performing sensing measurement by non-3GPP sensing being a sensing technology not using methods defined in 3GPP, and
a sensing function that manages sensing or the base station is configured to transmit non-3GPP sensing configuration information indicating a configuration content of non-3GPP sensing to the communication terminal.

6. A communication system comprising:
a base station supporting a fifth generation radio access system; and
a communication terminal configured to connect to the base station, wherein
a protocol data unit session is established as sensing user plane connection between a sensing function that manages sensing and the communication terminal, and
a sensing message is transmitted and received by using the sensing user plane connection.
